# FASCICULE DE BREVET EUROPEEN

(11) **EP 1 872 196 B1**
(45) Date de publication et mention de la délivrance du brevet: **14.12.2011**
(21) Numéro de dépôt: 06710349.9
(22) Date de dépôt: 10.02.2006
(51) Int. Cl.: G06F 3/023, H01H 9/18, H04M 1/22, G05G 1/02, G02B 27/01, G09F 9/00

(54) **DISPOSITIF ET PROCEDE D'AFFICHAGE**
ANZEIGEEINRICHTUNG UND -VERFAHREN
DISPLAY DEVICE AND METHOD

(30) Priorité: 10.02.2005 WO PCT/FR2005/000297; 13.10.2005 FR 0510472
(43) Date de publication de la demande: 02.01.2008
(73) Titulaire: Luo, David, 30900 Nimes (FR)
(72) Inventeur: Luo, David, 30900 Nimes (FR)
(86) Numéro de dépôt international: PCT/IB2006/000256
(87) Numéro de publication internationale: WO 2006/085200

(56) Documents cités:
- WO-A-2004/114342
- DE-A1- 3 235 752
- FR-A- 2 863 546
- FR-A- 2 863 724
- FR-A1- 2 863 725
- US-A- 4 448 504

## Description

La présente invention vise un dispositif et un procédé d'affichage, une touche, un clavier et un dispositif électronique les mettant en oeuvre. Elle s'applique, en particulier, aux appareils électroniques portables possédant plusieurs modes de fonctionnement, par exemple téléphone et jeu, téléphone et télécommande, radio, téléviseur portable, baladeur, système de positionnement, console de jeu, assistant numérique personnel, terminal d'accès à Internet et aux afficheurs publics, comme des panneaux publicitaires ou de signalisation routière ...

Les appareils électroniques portables sont soumis à une miniaturisation demandée par les utilisateurs et permis par les progrès technologiques. Les claviers de ces appareils ont donc tendance à être miniaturisés, ce qui les rend difficilement utilisables : le pas entre deux touches est du même ordre de grandeur que le diamètre des doigts, si bien que le nombre d'erreurs de saisie est important et/ou le nombre de touches est très réduit et la saisie de chaque symbole impose plusieurs pressions sur le clavier. Par exemple, pour permettre la saisie des 26 lettres avec un clavier comportant une douzaine de touches, plusieurs touches doivent correspondre à au moins trois lettres, sans compter les lettres avec accents.

De plus, le nombre de modes de fonctionnement des appareils électroniques portables augmente : les téléphones portables incorporent des appareils photographiques, des agendas, des gestionnaires de calendrier, des jeux, ...

Le clavier de ces appareils électroniques, dédié à la fonction principale, par exemple la téléphonie, n'est pas adapté aux autres modes de fonctionnement dans lesquels les symboles de clavier auxquels sont habitués les utilisateurs sont différents.

Enfin, il n'est pas possible de présenter, sur chaque touche du clavier, tous les symboles auxquels la touche de clavier devrait correspondre, sous peine de les rendre illisibles.

Dans les panneaux publicitaires ou les affichages publics ou de signalisation routière, lorsque l'on veut pouvoir afficher plusieurs messages, il est nécessaire soit des les juxtaposer, soit de faire défiler ces messages, par exemple en motorisant un moyen de déplacement des supports des messages. Ces systèmes sont coûteux, occupent un espace important ou affichent des messages de petite dimension, nuisible à leur reconnaissance.

La présente invention vise à remédier à ces inconvénients.

A cet effet, la présente invention vise, selon un premier aspect, un dispositif d'affichage comme décrit dans la revendication 1.

Selon l'invention l'élément partiellement réfléchissant est intégré dans le deuxième filtre ou placé en amont du deuxième filtre de telle manière que, lorsque la source de lumière est éteinte, le message porté par le deuxième filtre est visible et, lorsque la source de lumière est allumée, un message porté par un filtre amont est visible.

FR 2 863 546 A décrit un dispositif d'affichage selon le préambule de la revendication 1.

Grâce à ces dispositions, un message apparaît par défaut, en lumière ambiante et pour faire apparaître un autre message, par exemple un symbole, sur l'une des touches de clavier ou un message sur un panneau d'affichage, on allume la source de lumière et, éventuellement, on module la caractéristique de la source de lumière pour que cette caractéristique corresponde au filtre représentant ledit message ou symbole ou ledit message.

De plus, chaque message affiché peut ainsi occuper visuellement, pour l'utilisateur, la majeure partie de la surface d'affichage et, en tout cas, une emprise recouvrant, au moins partiellement, l'emprise des autres messages correspondants aux autres filtres.

Selon des caractéristiques particulières, l'élément partiellement réfléchissant est intégré dans le deuxième filtre, le contour du message à afficher étant défini par le contour d'une zone partiellement réfléchissante intégrée audit deuxième filtre.

Selon des caractéristiques particulières, au moins deux desdits filtres sont superposés dans la surface d'affichage.

Selon des caractéristiques particulières, au moins deux desdits filtres sont constitués, chacun d'un ensemble de filtres, lesdits ensembles de filtres étant juxtaposés en alternance dans la surface d'affichage.

Selon des caractéristiques particulières, le dispositif tel que succinctement exposé ci-dessus comporte au moins un contacteur adapté à fournir un signal représentatif de l'interaction entre un utilisateur et au moins une partie de la surface d'affichage.

Grâce à ces dispositions, le dispositif peut constituer un bouton électrique, un boutonpoussoir, un contacteur, un clavier, une touche, par exemple.

Selon des caractéristiques particulières, le dispositif tel que succinctement exposé ci-dessus comporte une pluralité de touches comportant un dit contacteur. Un clavier est ainsi constitué.

-Selon des caractéristiques particulières, le dispositif d'affichage tel que succinctement exposé ci-dessus comporte un moyen de modulation d'au moins une caractéristique physique de ladite source de lumière, au moins deux filtres correspondant, chacun, à une valeur de caractéristique physique modulée par le moyen de modulation et à un message à afficher sur ladite surface d'affichage.

Grâce à ces dispositions, l'allumage de la source de lumière permet d'afficher une pluralité de messages selon la commutation effectuée par le moyen de commutation.

Selon des caractéristiques particulières, le moyen de modulation est adapté à faire varier la bande spectrale lumineuse qui parvient aux dits filtres et les dits filtres présentent des bandes spectrales de transparence différentes.

Grâce à ces dispositions, lorsque le moyen de modulation fait varier la bande spectrale des rayons lumineux qui atteignent les filtres, ceux ci prennent des apparences visuelles différentes, ce qui a pour effet de faire apparaître des symboles ou messages différents dans la surface d'affichage, par exemple sur la touche de clavier, à laquelle ces filtres sont associés ou sur le panneau d'affichage comportant ces filtres.

Selon des caractéristiques particulières, la source de lumière comporte une diode électroluminescente dont la bande spectrale d'émission varie en fonction des caractéristiques électriques du signal d'alimentation qui lui est appliqué et le moyen de modulation est adapté à faire varier lesdites caractéristiques électriques.

Grâce à ces dispositions, la construction de la source de lumière, du système optique et du moyen de modulation sont simplifiées.

Selon des caractéristiques particulières, la source de lumière comporte au moins deux transducteurs électro-optiques indépendants placés en parallèle sur un chemin optique de rayons lumineux provenant de la source de lumière et parvenant à la surface d'affichage, le moyen de modulation étant adapté à commander alternativement l'émission de lumière par l'un ou l'autre des transducteurs électro-optiques.

Grâce à ces dispositions, les couleurs des symboles ou messages affichés alternativement, peuvent être identiques, la commutation des transducteurs électro-optiques provocant leurs affichages successifs.

Selon des caractéristiques particulières, le moyen de modulation est adapté à faire varier un axe de polarisation principal des rayons lumineux atteignant les filtres et les filtres présentent des transparences différentes selon les axes de polarisation. Grâce à ces dispositions, les différents symboles ou messages affichés alternativement sur la même surface d'affichage peuvent présenter les mêmes couleurs.

Selon des caractéristiques particulières, la source de lumière comporte une pluralité de transducteurs électro-optiques munis de fibres optiques dont les sorties forment des symboles différents sur la surface d'affichage, le moyen de modulation étant adapté à faire émettre de la lumière par l'un desdits transducteurs électro-optiques.

Grâce à ces dispositions, le clavier peut être très fin.

Selon des caractéristiques particulières, les filtres comportent des composants adaptés à réaliser des interférences constructives ou destructives selon l'angle d'incidence des rayons lumineux et le moyen de modulation est adapté à faire varier l'angle d'incidence des rayons lumineux émis par la source de lumière.

Selon des caractéristiques particulières, les filtres comportent des hologrammes et la source de lumière comporte au moins deux transducteurs électro-optiques adaptés à éclairer lesdits hologrammes avec des angles d'incidence différents pour faire apparaître différents symboles ou messages sur la surface d'affichage, le moyen de modulation étant adapté à faire varier l'angle d'incidence des rayons lumineux émis par la source de lumière.

Selon des caractéristiques particulières, les filtres comportent des composants adaptés à réaliser des réflexions totales ou partielles selon l'angle d'incidence des rayons lumineux et la source de lumière comporte au moins deux transducteurs électro-optiques adaptés à éclairer lesdits filtres avec des angles d'incidence différents pour faire apparaître différents symboles ou messages sur la surface d'affichage, le moyen de modulation étant adapté à faire varier l'angle d'incidence des rayons lumineux émis par la source de lumière.

Selon des caractéristiques particulières, les filtres comportent des composants adaptés à réaliser des transferts de lumière différentes selon l'angle d'incidence des rayons lumineux et la source de lumière comporte au moins deux transducteurs électro-optiques adaptés à éclairer lesdits filtres avec des angles d'incidence différents pour faire apparaître différents symboles ou messages sur la surface d'affichage, le moyen de modulation étant adapté à faire varier l'angle d'incidence des rayons lumineux émis par la source de lumière.

Grâce à chacune de ces dispositions, les différents symboles ou messages affichés alternativement sur la même surface d'affichage peuvent présenter les mêmes couleurs.

Selon des caractéristiques particulières, le chemin optique allant de la source de lumière à la surface d'affichage comporte au moins une fibre optique.

Grâce à ces dispositions, ce chemin optique peut être très fin, par exemple d'une épaisseur inférieure à 10 microns.

Selon des caractéristiques particulières, le chemin optique allant de la source de lumière à la surface d'affichage comporte un composant optique réflecteur.

Selon des caractéristiques particulières, le dispositif d'affichage tel que succinctement exposé ci-dessus comporte un moyen de réception de signaux issus d'un clavier dont les touches comportent des surfaces d'affichage, signaux représentatifs des touches de clavier activées par l'utilisateur, le moyen de réception étant adapté à affecter aux dits signaux le symbole affiché par la touche activée par l'utilisateur.

Grâce à ces dispositions, le traitement d'une saisie de symbole sur une touche du clavier tient compte du symbole qui était effectivement affiché sur cette touche.

Selon des caractéristiques particulières, l'un, au moins, desdits filtres est constitué d'une encre déposée sur un support.

Grâce à ces dispositions, l'utilisateur peut personnaliser les messages affichés par le dispositifs.

La présente invention vise aussi un dispositif électronique possédant au moins une des fonctions suivantes : un assistant numérique personnel, un organiseur, un téléphone, une console de jeu, un ordinateur portable, un terminal d'accès à Internet, un distributeur automatique de billets, un tableau de bord, une montre, une télécommande, un baladeur, un système de positionnement et un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeu, un élément de décoration, une lampe, un bouton électrique et un panneau d'affichage, dispositif électronique qui comporte un dispositif d'affichage tel que succinctement exposé ci-dessus.

Selon un deuxième aspect, la présente invention vise un procédé d'affichage comme décrit dans la revendication 16.

Les avantages, buts et caractéristiques de ce procédé et de ce dispositif électronique étant similaires à ceux des dispositifs d'affichage objets du premier aspect tel que succinctement exposés ci-dessus, ils ne sont pas rappelés ici.

La présente invention vise aussi, selon un troisième aspect, un dispositif d'affichage selon la revendication 1 qui comporte au moins une touche comportant notamment :
- un moyen de détection d'interaction adapté à fournir un signal représentatif de l'interaction entre un utilisateur et ladite touche,
de telle manière que, lorsque la source de lumière est éteinte, le message porté par chaque filtre amont, masqué par élément partiellement réfléchissant, n'est pas visible et, lorsque la source de lumière est allumée, un message porté par un filtre amont est visible.

Grâce à ces dispositions, pour faire apparaître sur la touche un message porté par un filtre amont, on allume la source de lumière. Le dispositif peut ainsi constituer un bouton électrique, un bouton-poussoir, un contacteur ou un clavier, par exemple, dont l'affichage de message est variable.

Selon des caractéristiques particulières, le dispositif tel que succinctement exposé ci-dessus comporte un moyen de gestion de touche adapté à gérer l'allumage de la source de lumière et à affecter au signal fourni par chaque moyen de détection, une signification fonction de l'affichage sur la touche avec laquelle l'utilisateur interagit.

Grâce à ces dispositions, le traitement d'une saisie de symbole sur une touche tient compte du message qui était effectivement affiché sur cette touche.

Selon des caractéristiques particulières, le dispositif tel que succinctement exposé ci-dessus comporte, pour au moins une touche, au moins un filtre dit « aval » intégré à l'élément partiellement réfléchissant ou situé en aval de l'élément partiellement réfléchissant et portant un message, chaque filtre aval étant placé sur un chemin optique suivi par des rayons lumineux issus de la source de lumière, les messages portés par chaque filtre amont et chaque filtre aval se recouvrant, au moins partiellement,
de telle manière que, lorsque la source de lumière est éteinte, un message porté par un filtre aval est visible et, lorsque la source de lumière est allumée, un message porté par un filtre amont est visible.

Grâce à ces dispositions, un message porté par un filtre aval apparaît par défaut, en lumière ambiante, lorsque la source de lumière est éteinte et, pour faire apparaître un autre message, porté par un filtre amont, on allume la source de lumière.

De plus, puisque les messages se recouvrent au moins partiellement, chaque message affiché peut occuper visuellement, pour l'utilisateur, la majeure partie de la surface d'affichage de la touche et, en tout cas, une emprise recouvrant, au moins partiellement, l'emprise des autres messages correspondants aux autres filtres.

Selon des caractéristiques particulières, au moins deux desdits filtres sont superposés.

Selon des caractéristiques particulières, au moins deux desdits filtres sont constitués, chacun, d'un ensemble d'éléments de filtres, lesdits éléments de filtres étant juxtaposés en alternance.

Selon des caractéristiques particulières, le dispositif tel que succinctement exposé ci-dessus comporte une pluralité de touches et un moyen de gestion de touches adapté à gérer individuellement l'allumage de la source de lumière de chaque dite touche.

Selon des caractéristiques particulières, le moyen de gestion de touches est adapté à faire afficher sur des touches des messages correspondant à des fonctions immédiatement disponibles en fonction de l'état du dispositif.

Selon des caractéristiques particulières, le moyen de gestion de touches est adapté à faire afficher sur des touches, successivement, des messages correspondants à des symboles à faire saisir à l'utilisateur par interaction avec la touche portant ledit message.

Selon des caractéristiques particulières, le moyen de gestion de touche est adapté à faire afficher sur des touches, conjointement, des messages correspondants à des symboles d'un même mot.

Selon des caractéristiques particulières, le moyen de gestion est adapté à faire afficher sur des touches, des messages correspondant à des symboles que l'utilisateur peut saisir, en fonction de la vitesse de saisie de l'utilisateur.

Selon des caractéristiques particulières, le moyen de gestion est adapté à faire afficher sur des touches, des messages correspondant à des symboles que l'utilisateur peut saisir, en fonction du taux d'erreur de saisie de l'utilisateur.

Selon des caractéristiques particulières, le dispositif tel que succinctement exposé ci-dessus comporte, pour au moins une touche, au moins deux filtres amonts portant des messages différents et possédant des caractéristiques optiques différentes et un moyen de modulation d'au moins une caractéristique optique de la source de lumière, chacun desdits filtres amonts correspondant à une valeur de caractéristique optique modulée par le moyen de modulation.

Ainsi, on module une caractéristique optique de la source de lumière pour que cette caractéristique corresponde au filtre représentant un message à afficher. Plusieurs messages différents peuvent alors être affichés par rétro-éclairage, par modulation d'une caractéristique physique de la source de lumière.

Selon des caractéristiques particulières, le moyen de modulation est adapté à faire varier la bande spectrale lumineuse qui parvient aux dits filtres et les dits filtres présentent des bandes spectrales de transparence différentes.

Grâce à ces dispositions, lorsque le moyen de modulation fait varier la bande spectrale des rayons lumineux qui atteignent les filtres, ceux ci prennent des apparences visuelles différentes, ce qui a pour effet de faire apparaître des symboles ou messages différents dans la surface d'affichage de la touche, par exemple sur la touche de clavier, à laquelle ces filtres sont associés ou sur le panneau d'affichage comportant ces filtres.

Selon des caractéristiques particulières, la source de lumière comporte une diode électroluminescente dont la bande spectrale d'émission varie en fonction des caractéristiques électriques du signal d'alimentation qui lui est appliqué et le moyen de modulation est adapté à faire varier lesdites caractéristiques électriques.

Grâce à ces dispositions, la construction de la source de lumière, du système optique et du moyen de modulation sont simplifiées.

Selon des caractéristiques particulières, la source de lumière comporte au moins deux transducteurs électro-optiques, le moyen de modulation étant adapté à commander alternativement l'émission de lumière par l'un ou l'autre des transducteurs électro-optiques.

Grâce à ces dispositions, les couleurs des symboles ou messages affichés alternativement, peuvent être identiques, la commutation des transducteurs électro-optiques provocant leurs affichages successifs.

Selon des caractéristiques particulières, le moyen de modulation est adapté à faire varier un axe de polarisation principal des rayons lumineux atteignant les filtres et au moins un filtre présente une transparence différente selon la polarisation de la lumière qui l'atteint.

Grâce à ces dispositions, les différents symboles ou messages affichés alternativement sur la même surface d'affichage peuvent présenter les mêmes couleurs.

Selon des caractéristiques particulières, la source de lumière comporte une pluralité de transducteurs électro-optiques munis de fibres optiques dont les sorties forment un message sur la touche, le moyen de modulation étant adapté à faire émettre de la lumière par lesdits transducteurs électro-optiques.

Grâce à ces dispositions, le clavier peut être très fin.

Selon des caractéristiques particulières, au moins un filtre comporte un composant adapté à réaliser des interférences constructives ou destructives selon l'angle d'incidence des rayons lumineux et le moyen de modulation est adapté à faire varier l'angle d'incidence des rayons lumineux émis par la source de lumière.

Selon des caractéristiques particulières, au moins un filtre comporte au moins un hologramme et la source de lumière comporte au moins deux transducteurs électro-optiques adaptés à éclairer lesdits hologrammes avec des angles d'incidence différents, le moyen de modulation étant adapté à faire varier l'angle d'incidence des rayons lumineux émis par la source de lumière.

Selon des caractéristiques particulières, au moins un filtre comporte au moins un composant adapté à réaliser des transferts de lumière différentes selon l'angle d'incidence des rayons lumineux et la source de lumière comporte au moins deux transducteurs électro-optiques adaptés à éclairer lesdits filtres avec des angles d'incidence différents, le moyen de modulation étant adapté à faire varier l'angle d'incidence des rayons lumineux émis par la source de lumière.

Grâce à chacune de ces dispositions, les différents symboles ou messages affichés alternativement sur la même surface d'affichage peuvent présenter les mêmes couleurs.

Selon des caractéristiques particulières, le chemin optique des rayons issus de la source de lumière comporte au moins une fibre optique.

Grâce à ces dispositions, ce chemin optique peut être très fin, par exemple d'une épaisseur inférieure à 10 microns.

Selon des caractéristiques particulières, le chemin optique des rayons issus de la source de lumière comporte un composant optique réflecteur.

Selon des caractéristiques particulières, l'un, au moins, desdits filtres est constitué par dépôt d'encre déposée sur un support uniforme.

Grâce à ces dispositions, l'utilisateur peut personnaliser les messages affichés par le dispositifs.

Selon des caractéristiques particulières, pour au moins une touche, le moyen de détection est adapté à provoquer un changement de l'affichage sur ladite touche

Selon des caractéristiques particulières, l'élément partiellement réfléchissant comporte une surface dépolie.

La présente invention vise aussi un dispositif électronique possédant au moins une des fonctions suivantes : un assistant numérique personnel, un organiseur, un téléphone, une console de jeu, un ordinateur, un terminal d'accès à Internet, un distributeur automatique de billets, un tableau de bord, une montre, une télécommande, un baladeur, un système de positionnement et un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeu, un élément de décoration, une lampe, un bouton électrique et un panneau d'affichage, dispositif électronique qui comporte un dispositif d'affichage tel que succinctement exposé ci-dessus.

Selon un quatrième aspect, la présente invention vise un procédé d'affichage selon la revendication 16 qui comporte notamment :
- une étape de détection d'interaction pour fournir un signal représentatif de l'interaction entre un utilisateur et ladite touche.

Les avantages, buts et caractéristiques de ce procédé d'affichage et de ce dispositif électronique étant similaires à ceux du dispositif d'affichage objet du troisième aspect tel que succinctement exposés ci-dessus, ils ne sont pas rappelés ici.

D'autres avantages, buts et caractéristiques de la présente invention ressortiront de la description qui va suivre faite, dans un but explicatif et nullement limitatif, en regard des dessins annexés dans lesquels :
- les figures 1A et 1B représentent, schématiquement, deux variantes d'un circuit électronique associé à un dispositif d'affichage tel qu'illustré dans l'une des figures 2 à 14 ;
- la figure 2 représente, schématiquement, en coupe, un premier mode de réalisation du dispositif d'affichage objet de la présente invention ;
- la figure 3 représente, schématiquement, en vue de dessus, le dispositif d'affichage illustré en figure 2 ;
- la figure 4 représente, schématiquement, en coupe, un deuxième mode de réalisation du dispositif d'affichage objet de la présente invention ;
- la figure 5 représente, schématiquement, en vue de dessus, le dispositif d'affichage illustré en figure 4 ;
- la figure 6 représente, schématiquement, en coupe, un troisième mode de réalisation du dispositif d'affichage objet de la présente invention ;
- la figure 7 représente, schématiquement, en vue de dessus, le dispositif d'affichage illustré en figure 6 ;
- la figure 8 représente, schématiquement, en coupe, un quatrième mode de réalisation du dispositif d'affichage objet de la présente invention ;
- la figure 9 représente, schématiquement, en vue de dessus, le dispositif d'affichage illustré en figure 8 ;
- la figure 10 représente, schématiquement, en coupe, un cinquième mode de réalisation du dispositif d'affichage objet de la présente invention ;
- la figure 11 représente, schématiquement, en coupe, un sixième mode de réalisation du dispositif d'affichage objet de la présente invention ;
- la figure 12 représente, sous forme d'un logigramme, des étapes mises en oeuvre dans un premier mode de réalisation particulier du procédé objet de la présente invention ;
- la figure 13 représente, sous forme d'un logigramme, des étapes mises en oeuvre dans un deuxième mode de réalisation particulier du procédé objet de la présente invention et
- la figure 14 représente, schématiquement, en coupe, un septième mode de réalisation du dispositif d'affichage objet de la présente invention.
- la figure 15 représente, schématiquement, un huitième mode de réalisation du dispositif d'affichage objet de la présente invention, sous forme d'un panneau adapté à afficher différents messages ;
- les figures 16 à 19 représentent, schématiquement, en coupe, des surfaces d'affichage de modes de réalisation particuliers d'affiche pour afficher différents messages et
- la figure 20 représente, schématiquement et en coupe, un neuvième mode de réalisation du dispositif d'affichage objet de la présente invention.

Dans toute la description, on décrit des sources de lumière comportant une ou plusieurs diodes électroluminescentes. Cependant, la présente invention ne se limite pas à ce type de transducteur électro-optique, mais couvre tous les types de sources de lumière, par exemple diode électroluminescente organique (ou « oled »), ampoule à incandescence ou ampoule dite « fluo ».

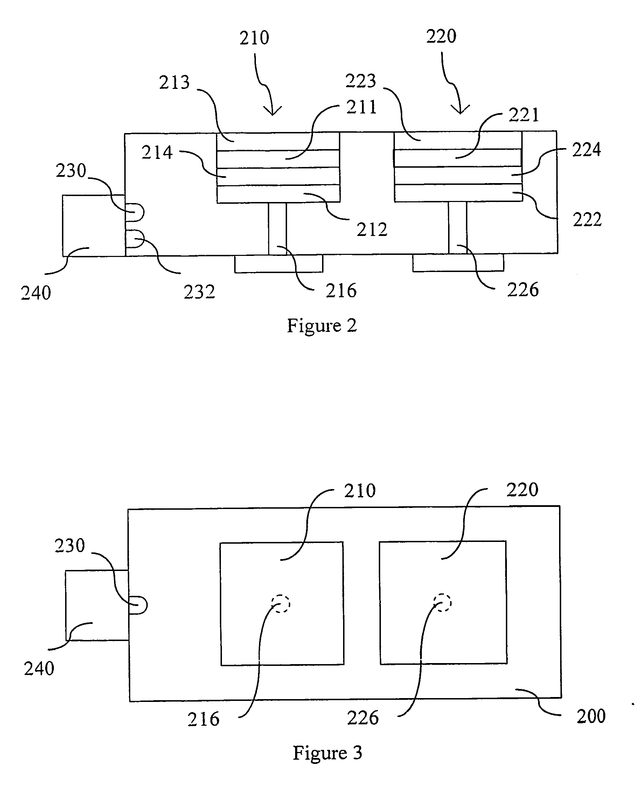

Dans les figures 2 à 14, on représente des claviers comportant une pluralité de touches. La présente invention ne se limite pas à ce type de clavier mais s'étend, bien au contraire, aux claviers avec une seule touche, aux touches, boutons et contacteurs qui mettent en oeuvre les caractéristiques de la présente invention.

Dans toute la description de touches ou de claviers, on décrit, à titre d'exemple, des moyens de détection d'interaction sous forme de contacteurs électriques réalisant un contact électrique lorsque l'utilisateur appuie sur une touche liée audit contacteur. Cependant, la présente invention peut être mise en oeuvre avec tous les types de moyen de détection, par exemple des contacteurs mettant en oeuvre des caoutchoucs conducteurs, des contacteurs mécaniques, des membranes tactiles ou non-tactiles, des contacteurs mettant en oeuvre des commutations optiques, des variations d'impédance, par exemple de capacitance, des contacteurs à effet Hall, Reed, PushGate et Piézoélectriques, ou des émetteurs-récepteurs de rayonnement, par exemple infrarouge, électrique ou magnétique pour détecter l'appui ou la proximité d'un doigt de l'utilisateur.

Dans la description, on décrit de nombreux filtres possédant au moins une partie transparente. Cependant pour compenser les différences d'intensités lumineuses qui pourraient apparaître entre ces parties transparentes et les parties filtrantes, pour les rayons lumineux qui n'y sont pas filtrés, les parties dites transparentes, peuvent avoir un coefficient de transparence inférieure à 100 %.

Dans toute la description, on utilise « message » ou « symbole » pour désigner une forme visible intelligible. Par exemple, des lettres, des chiffres, des caractères, des mots, des photographiques, des logos, icônes ou autres graphismes sont, au sens de la présente invention, des messages ou des symboles. On admet qu'une surface de couleur uniforme n'est pas un message ou un symbole au sens de la présente invention.

Dans toute la description, on appelle « amont » un filtre qui se trouve, sur le chemin optique des rayons issus d'une source de lumière interne au dispositif, avant un élément partiellement réfléchissant et « aval » un filtre qui se trouve confondu avec cet élément partiellement réfléchissant ou après cet élément partiellement réfléchissant.

On appelle élément partiellement réfléchissant une surface qui retourne du côté d'où provient de la lumière, au moins 15 % et préférentiellement, au moins 30 %, de la lumière provenant de ce côté, perpendiculairement à cette surface.

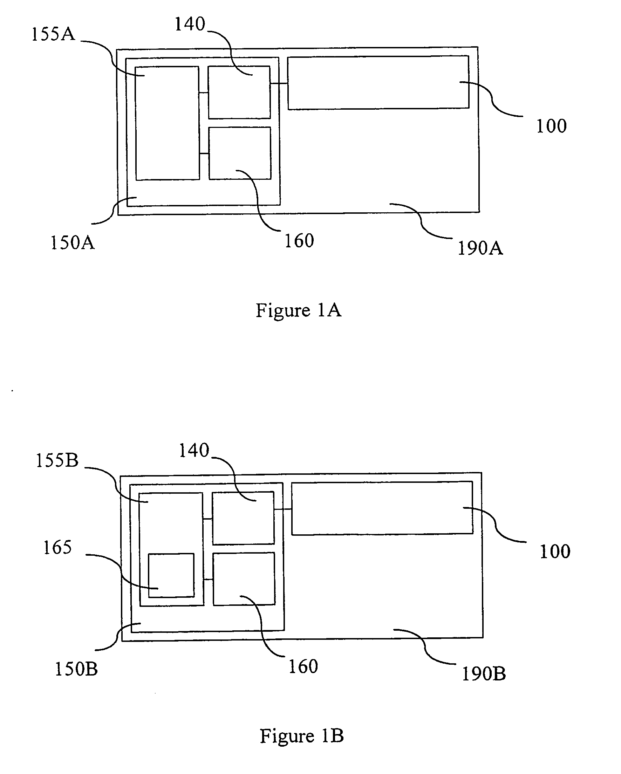

On observe, en figure 1A, un circuit électronique 150A associé à un clavier 100 dans un appareil électronique 190A. Le circuit électronique 150A comporte un moyen de commande de commutation 155A et un moyen d'exploitation 160 des messages ou symboles sélectionnés au clavier 100 par interaction d'un utilisateur.

Dans le mode de réalisation illustré en figure 1A, le moyen de commande de commutation 155A comporte deux sorties, dont l'une commande le moyen de modulation 140 du clavier 100 et dont l'autre est reliée au moyen d'exploitation 160.

Le moyen de commande de commutation 155A est un système programmable muni d'un programme ou une routine de programme, par exemple agissant en fonction de choix effectués par l'utilisateur au cours d'une navigation dans un menu de fonctions et de paramètres, en fonction d'applications informatiques mises en oeuvre par l'appareil 190A et/ou de facteurs contextuels comme exposé plus loin.

On observe, en figure 1B, un circuit électronique 150B associé à un clavier 100 dans un appareil électronique 190B. Le circuit électronique 150B comporte un moyen de commande de commutation 155B et le moyen d'exploitation 160 des messages ou symboles sélectionnés au clavier 100 par interaction d'un utilisateur.

Dans le mode de réalisation illustré en figure 1B, le moyen de commande de commutation 155B comporte un capteur d'une grandeur physique 165 et deux sorties, dont l'une commande le moyen de modulation 140 du clavier 100 et dont l'autre est reliée au moyen d'exploitation 160.

Le capteur d'une grandeur physique 165 est adapté à capter une variation d'au moins une grandeur physique, par exemple un appui sur une touche, un masquage optique, une position de l'appareil 190. Il peut donc être constitué, par exemple, d'au moins une photodiode, d'au moins un phototransistor, d'un commutateur manuel, d'une touche de clavier, d'un capteur d'orientation.

Par exemple, le capteur 165 est un capteur de présence d'une main de l'utilisateur, pour sélectionner les messages ou symboles à afficher en fonction de la main utilisée pour saisir un symbole au clavier.

Le clavier 100 est conforme à un mode de réalisation du clavier objet de la présente invention, par exemple l'un des modes de réalisations exposés en regard des figures 1 à 14.

La commutation du moyen de commutation provoque le changement de messages affichés sur le clavier 100 et le changement d'interprétation des messages saisis avec ce clavier, en vue de leur exploitation par le moyen d'exploitation 160.

Par exemple, deux ensembles de symboles représentent deux ensembles de lettres de l'alphabet dont la commutation est commandée grâce à un capteur photosensible qui peut être masqué par un doigt de l'utilisateur.

Selon un autre exemple d'application, pour réaliser un clavier de télécommande universelle, la présente invention permet d'affecter successivement les mêmes touches de clavier à différentes interfaces auxquelles l'utilisateur s'est habitué (téléviseur, chaîne musicale, magnétoscope, lecteur de supports numériques, ...).

En variante, le circuit électronique 150A ou 150B est muni d'un capteur de luminosité ambiante (par exemple une photodiode exposée à la lumière ambiante) et commande la luminosité de chaque source de lumière en fonction croissante de la luminosité ambiante.

Le circuit électronique, 150A ou 150B, est adapté à assurer au moins une fonction de l'appareil électronique, 190A ou 190B, parmi les suivantes, grâce à des circuits spécifiques (non représentés) du moyen d'exploitation 160 :
- assistant numérique personnel (connu sous le nom de PDA pour personal digital assistant),
- organiseur,
- téléphone, particulièrement téléphone mobile,
- terminal d'accès à Internet ou à un autre réseau informatique,
- console de jeu,
- ordinateur, particulièrement ordinateur portable,
- distributeur automatique de billets,
- tableau de bord,
- montre,
- télécommande,
- baladeur,
- système de positionnement, par exemple par référence à des signaux satellitaires,
- récepteur de signaux audiovisuels, par exemple téléviseur portable, radio portable ou autoradio,
- équipement électronique, bureautique ou de loisir,
- télécopieur,
- photocopieur,
- scanneur,
- lecteur de supports enregistrés,
- installation de domotique,
- appareil électroménager,
- équipement médical,
- appareil de mesure,
- automate d'analyse,
- équipement automobile,
- panneau d'indication,
- interrupteur,
- dispositif de jeu,
- élément de décoration,
- lampe
- bouton électrique et
- panneau d'affichage.

Parmi les applications de la présente invention, on peut citer la possibilité qu'elle permet de réaliser un très petit clavier présentant trois affichages, l'un pour les chiffres et les deux autres pour chaque moitié d'un clavier alphabétique. On peut aussi citer un clavier comportant un petit afficheur des derniers caractères saisis et une mémoire des caractères saisis permettant de stocker des textes pour les transférer ensuite vers des dispositifs informatiques et/ou téléphoniques.

On observe, en figures 2 et 3, un clavier 200 comportant des touches 210 et 220, munies d'un élément partiellement réfléchissant respectivement 211, touche 210, et 221, touche 220, de filtres, respectivement 212 à 214, touche 210, et 222 à 224, touche 220, et de contacteurs électriques, respectivement 216 et 226. Une source de lumière est constituée de deux diodes électroluminescentes 230 et 232 commandées par un moyen de modulation 240.

Pour la touche 210, en partant de l'extérieur, en haut sur la figure 2, se trouvent successivement le filtre aval 213, l'élément partiellement réfléchissant 211, le filtre amont 214 et le filtre amont 212. Pour la touche 220, en partant de l'extérieur, en haut sur la figure 2, se trouvent successivement le filtre aval 223, l'élément partiellement réfléchissant 221, le filtre amont 224 et le filtre amont 222.

Les contacteurs électriques 216 et 226 effectuent un contact électrique entre leurs bornes lorsque l'on presse ou appuie sur les touches 210 et 220, respectivement. Le moyen de modulation 240 est un commutateur électrique qui alimente l'une ou l'autre ou aucune des diodes électroluminescentes 230 et 232.

Les diodes électroluminescentes 230 et 232 émettent dans des bandes spectrales différentes, préférentiellement disjointes. Par exemple, la diode électroluminescente 230 émet des rayons lumineux dont les longueurs se trouvent entre 400 et 500 nanomètres et la diode électroluminescente 232 émet des rayons lumineux dont les longueurs se trouvent entre 600 et 700 nanomètres.

Les filtres 212 à 214, d'une part, et 222 à 224, d'autre part, sont superposés, c'est-à-dire qu'ils se trouvent successivement placés sur le chemin optique des rayons lumineux issus des diodes électroluminescentes 230 et 232. Sur les filtres 212 à 214 sont formés des symboles différents, par exemple « 1 », « & » et « > », les filtres 212 à 214 étant respectivement transparents en dehors des formes de ces symboles. Les filtres 212 et 214 et possèdent, dans la forme des symboles, des spectres d'absorption correspondant respectivement sensiblement aux spectres d'émission des diodes électroluminescentes 230 et 232. Le filtre aval 213 possède, dans la forme du symbole qu'il porte, un spectre d'absorption inclus dans les longueurs d'ondes visibles qui ne sont émises par aucune des diodes électroluminescentes 230 et 232, par exemple de 500 à 600 nanomètres.

L'ensemble optique de la touche 220 est similaire à celui de la touche 210, à ceci près que les symboles portés par les filtres 222 à 224, respectivement « 2 », « / » et « < », sont en négatif, l'absorption de longueurs d'onde se faisant en dehors de la forme des symboles et la transparence étant réalisée dans la forme des symboles.

Lorsque le moyen de modulation 240 ne commande l'allumage d'aucune des diodes électroluminescentes, c'est l'éclairage ambiant qui éclaire le filtre aval 213 et, à travers lui, l'élément partiellement réfléchissant 211. Si la couleur de la lumière réfléchie par l'élément partiellement réfléchissant est neutre, le symbole visible sur la touche 210 est donc le symbole « & », en magenta sur fond gris. De même, le symbole visible sur la touche 220 est le symbole « / » en gris sur fond magenta. Bien entendu, si la couleur de la lumière réfléchie par l'élément partiellement réfléchissant n'est pas neutre, la couleur du fond du symbole apparaissant sur la touche 210 et la couleur du symbole apparaissant sur la touche 220 seront différentes.

Lorsque le moyen de modulation 240 commande l'allumage de la diode électroluminescente 230 et l'extinction de la diode électroluminescente 232, la source de lumière émet des rayons lumineux dont les longueurs d'onde se trouvent entre 400 et 500 nanomètres. Les rayons lumineux émis par la source de lumière traversent le filtre amont 212 en dehors du symbole représenté par ce filtre et sont absorbés dans ce symbole puisque son spectre d'absorption correspond au spectre d'émission de la diode électroluminescente 230. Puis, les rayons restants traversent les filtres amont 214 puis aval 213 aussi bien dans la forme du symbole porté par ces filtres qu'en dehors de ces symboles puisque ces filtres sont transparents dans le spectre d'émission de la diode électroluminescente 230. Pour la touche 210, le symbole visible est donc le symbole porté par le filtre amont 212, ici « 1 », qui apparaît en noir sur fond bleu.

De la même manière, pour la touche 220, le symbole visible est le symbole porté par le filtre amont 222, ici « 2 », qui apparaît en bleu sur fond noir.

Lorsque le moyen de modulation 240 commande l'allumage de la diode électroluminescente 232 et l'extinction de la diode électroluminescente 230, la source de lumière émet des rayons lumineux dont les longueurs d'onde se trouvent entre 600 et 700 nanomètres. Les rayons lumineux émis par la source de lumière traversent le filtre amont 212 aussi bien en dehors du symbole représenté par ce filtre que dans ce symbole puisqu'il est transparent aux rayons du spectre d'émission de la diode électroluminescente 232. Puis, les rayons sont absorbés dans la forme du symbole porté par le filtre amont 214 et traversent ce filtre en dehors de la forme de ce symbole puisque le spectre d'absorption du filtre amont 214 correspond au spectre d'émission de la diode électroluminescente 232. Les rayons lumineux émis par la source de lumière traversent le filtre aval 213 aussi bien en dehors du symbole représenté par ce filtre que dans ce symbole puisque le filtre aval 213 est transparent aux rayons du spectre d'émission de la diode électroluminescente 232.

Pour la touche 210, le symbole visible est donc le symbole porté par le filtre amont 214, ici « > », qui apparaît en noir sur fond rouge.

De la même manière, pour la touche 220, le symbole visible est le symbole porté par le filtre amont 224, ici « < », qui apparaît en rouge sur fond noir.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 200, soit un symbole, soit un autre, un troisième symbole étant affiché, par défaut, lorsque la source de lumière est éteinte.

En variante du premier mode de réalisation, illustré en figures 2 et 3, la source de lumière comporte une diode électroluminescente dont le spectre de longueur d'ondes d'émission dépend d'au moins une caractéristique électrique du signal qui lui est appliqué, par exemple la tension.

En variante du premier mode de réalisation, illustré en figures 2 et 3, la source de lumière comporte deux diodes électroluminescentes émettant dans le même spectre visible, associées, chacune, à un filtre chromatique.

En variante du premier mode de réalisation, illustré en figures 2 et 3, la source de lumière comporte une diode électroluminescente suivie d'un filtre polariseur dichroïque placé optiquement à la suite d'un écran à cristaux liquides à une seule cellule et ne comportant qu'un filtre polarisant en entrée, la commande de cet écran à cristaux liquides permettant de faire varier la polarisation de sortie de l'écran à cristaux liquides et, partant, de la couleur des rayons lumineux issus de la source de lumière.

On observe ici que le nombre de filtres pouvant être superposés et le nombre de diodes électroluminescentes correspondantes ne sont pas limités à deux mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les filtres possèdent un spectre d'absorption correspondant aux spectres d'émission possibles de la source de lumière.

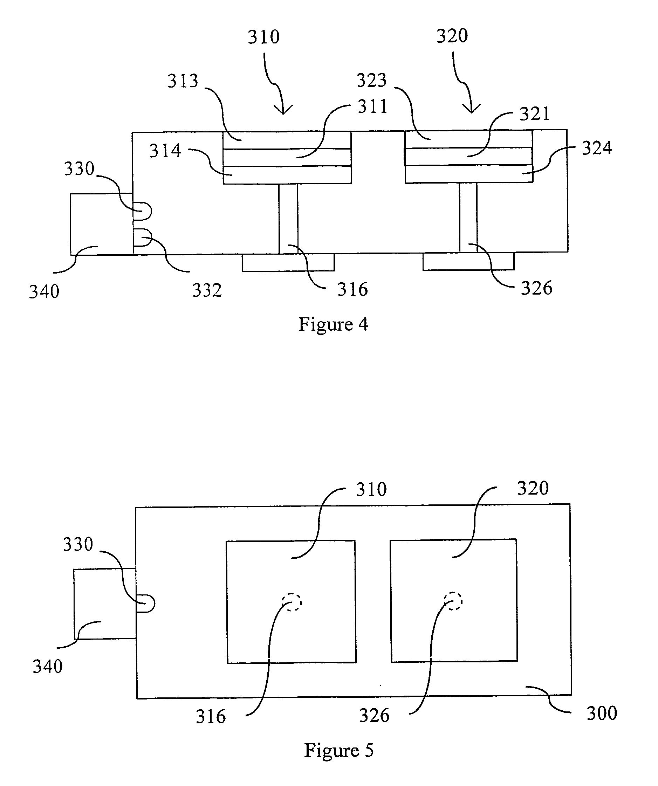

On observe, en figures 4 et 5, un clavier 300 comportant des touches 310 et 320, munies d'un élément partiellement réfléchissant respectivement 311, touche 310, et 321, touche 320, de filtres, respectivement 313 et 314, touche 310, et 323 et 324, touche 320, et de contacteurs électriques, respectivement 316 et 326. Une source de lumière est constituée de deux diodes électroluminescentes 330 et 332 commandées par un moyen de modulation 340.

Pour la touche 310, en partant de l'extérieur, en haut sur la figure 4, se trouvent successivement le filtre aval 313, l'élément partiellement réfléchissant 311 et le filtre amont 314. Pour la touche 320, en partant de l'extérieur, en haut sur la figure 4, se trouvent successivement le filtre aval 323, l'élément partiellement réfléchissant 321 et le filtre amont 324.

Les contacteurs électriques 316 et 326 effectuent un contact électrique entre leurs bornes lorsque l'on presse ou appuie sur les touches 310 et 320, respectivement. Le moyen de modulation 340 est un commutateur électrique qui alimente l'une ou l'autre ou aucune des diodes électroluminescentes 330 et 332.

Les diodes électroluminescentes 330 et 332 émettent dans des bandes spectrales différentes, préférentiellement disjointes. Par exemple, la diode électroluminescente 330 émet des rayons lumineux dont les longueurs se trouvent entre 400 et 550 nanomètres et la diode électroluminescente 332 émet des rayons lumineux dont les longueurs se trouvent entre 550 et 700 nanomètres.

Les filtres aval 313 et amont 314, d'une part, et les filtres aval 323 et amont 324, d'autre part, sont superposés, c'est-à-dire qu'ils se trouvent successivement placés sur le chemin optique des rayons lumineux issus des diodes électroluminescentes 330 et 332. Sur les filtres aval 313 et amont 314 sont formés des symboles différents, par exemple « 1 », et « > », les filtres aval 313 et amont 314 étant respectivement transparents en dehors des formes de ces symboles et possédant, dans la forme des symboles, des spectres d'absorption correspondant respectivement sensiblement aux spectres d'émission des diodes électroluminescentes 330 et 332.

L'ensemble optique de la touche 320 est similaire à celui de la touche 310, à ceci près que les symboles portés par les filtres aval 323 et amont 324, respectivement « 2 » et « < », sont en négatif, l'absorption de longueurs d'onde se faisant en dehors de la forme des symboles et la transparence étant réalisée dans la forme des symboles.

Lorsque le moyen de modulation 340 ne commande l'allumage d'aucune des diodes électroluminescentes, c'est l'éclairage ambiant qui éclaire le filtre aval 313 et, à travers lui, l'élément partiellement réfléchissant 311. Si la couleur de la lumière réfléchie par l'élément partiellement réfléchissant est neutre, le symbole visible sur la touche 310 est donc le symbole « 1 », en rouge-orangé sur fond neutre. De même, le symbole visible sur la touche 320 est le symbole « 2 » porté par le filtre aval 323, en couleur neutre (grise) sur fond rouge-orangé. Bien entendu, si la couleur de la lumière réfléchie par l'élément partiellement réfléchissant n'est pas neutre, la couleur du fond du symbole apparaissant sur la touche 310 et la couleur du symbole apparaissant sur la touche 320 seront différentes.

Lorsque le moyen de modulation 340 commande l'allumage de la diode électroluminescente 330 et l'extinction de la diode électroluminescente 332, la source de lumière émet des rayons lumineux dont les longueurs d'onde se trouvent entre 400 et 550 nanomètres. Les rayons lumineux émis par la source de lumière traversent le filtre amont 314 puisque son spectre d'absorption ne correspond pas au spectre d'émission de la diode électroluminescente 330. Puis, les rayons restants traversent le filtre aval 313 en dehors de la forme du symbole porté par ce filtre mais pas dans la forme de ces symboles puisque ces filtres absorbent, dans la forme des symboles le spectre d'émission de la diode électroluminescente 330. Pour la touche 310, le symbole visible est donc le symbole porté par le filtre aval 313, ici « 1 », qui apparaît en noir sur fond vert-bleu.

De la même manière, pour la touche 320, le symbole visible est le symbole porté par le filtre aval 323, ici « 2 », qui apparaît en vert-bleu sur fond noir.

Lorsque le moyen de modulation 340 commande l'allumage de la diode électroluminescente 332 et l'extinction de la diode électroluminescente 330, la source de lumière émet des rayons lumineux dont les longueurs d'onde se trouvent entre 550 et 700 nanomètres. Les rayons lumineux émis par la source de lumière sont absorbés dans la forme du symbole porté par le filtre amont 314 et traversent ce filtre en dehors de la forme de ce symbole puisque le spectre d'absorption du filtre amont 314 correspond au spectre d'émission de la diode électroluminescente 332. Les rayons lumineux émis par la source de lumière traversent le filtre aval 313 aussi bien en dehors du symbole représenté par ce filtre que dans ce symbole puisqu'il est transparent aux rayons du spectre d'émission de la diode électroluminescente 332.

Pour la touche 310, le symbole visible est donc le symbole porté par le filtre amont 314, ici « > », qui apparaît en noir sur fond orangé. De la même manière, pour la touche 320, le symbole visible est le symbole porté par le filtre amont 324, ici « < », qui apparaît en orangé sur fond noir.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 300, soit un symbole, soit un autre, l'un de ces symboles étant affiché, par défaut, lorsque la source de lumière est éteinte.

En variante du deuxième mode de réalisation, illustré en figures 4 et 5, la source de lumière comporte une diode électroluminescente dont le spectre de longueur d'ondes d'émission dépend d'au moins une caractéristique électrique du signal qui lui est appliqué, par exemple la tension.

En variante du deuxième mode de réalisation, illustré en figures 4 et 5, la source de lumière comporte deux diodes électroluminescentes émettant dans le même spectre visible, associées, chacune, à un filtre chromatique.

En variante du deuxième mode de réalisation, illustré en figures 4 et 5, la source de lumière comporte une diode électroluminescente suivie d'un filtre polariseur dichroïque placé optiquement à la suite d'un écran à cristaux liquides à une seule cellule et ne comportant qu'un filtre polarisant en entrée, la commande de cet écran à cristaux liquides permettant de faire varier la polarisation de sortie de l'écran à cristaux liquides et, partant, de la couleur des rayons lumineux issus de la source de lumière.

On observe ici que le nombre de filtres pouvant être superposés et le nombre de diodes électroluminescentes correspondantes ne sont pas limités à deux mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les filtres possèdent un spectre d'absorption correspondant aux spectres d'émission possibles de la source de lumière.

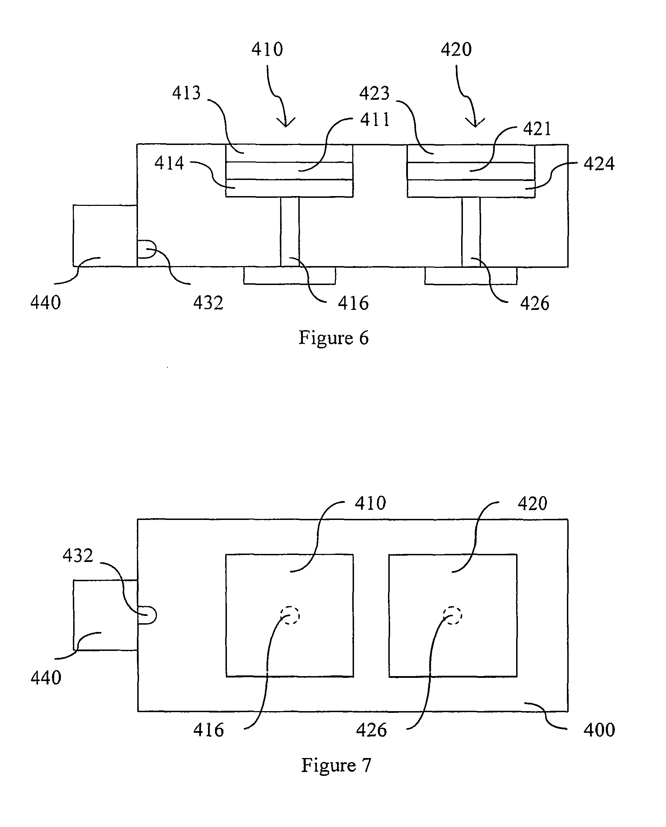

On observe, en figures 6 et 7, un clavier 400 comportant des touches 410 et 420 munies d'un élément partiellement réfléchissant respectivement 411, touche 410, et 421, touche 420, de filtres, respectivement aval 413 et amont 414, touche 410, et filtres aval 423 et amont 424, touche 420, et de contacteurs électriques, respectivement 416 et 426. Une source de lumière est constituée d'une diode électroluminescente 432 commandée par un moyen de modulation 440.

Pour la touche 410, en partant de l'extérieur, en haut sur la figure 6, se trouvent successivement le filtre aval 413, l'élément partiellement réfléchissant 411 et le filtre amont 414. Pour la touche 420, en partant de l'extérieur, en haut sur la figure 6, se trouvent successivement le filtre aval 423, l'élément partiellement réfléchissant 421 et le filtre amont 424.

Les contacteurs électriques 416 et 426 effectuent un contact électrique entre leurs bornes lorsque l'on presse ou appuie sur les touches 410 et 420, respectivement. Le moyen de modulation 440 est un commutateur électrique qui allume ou éteint la diode électroluminescente 432. La diode électroluminescente 432 émet des rayons lumineux dont les longueurs se trouvent entre 550 et 700 nanomètres.

Les filtres aval 413 et amont 414, d'une part, et les filtres aval 423 et amont 424, d'autre part, sont superposés, c'est-à-dire qu'ils se trouvent successivement placés sur le chemin optique des rayons lumineux issus de la diode électroluminescente 432. Sur les filtres aval 413 et amont 414 sont formés des symboles différents, par exemple « 1 », et « > ». Les filtres aval 413 et amont 414 sont respectivement transparents en dehors des formes de ces symboles et possédant, dans la forme des symboles, des spectres d'absorption correspondant respectivement sensiblement au spectre d'émission de la diode électroluminescente 432, filtre amont 414, et au reste du spectre visible, filtre aval 413.

L'ensemble optique de la touche 420 est similaire à celui de la touche 410, à ceci près que les symboles portés par les filtres aval 423 et amont 424, respectivement « 2 » et « < », sont en négatif, l'absorption de longueurs d'onde se faisant en dehors de la forme des symboles et la transparence étant réalisée dans la forme des symboles.

Lorsque le moyen de modulation 440 ne commande pas l'allumage de la diode électroluminescente 432, c'est l'éclairage ambiant qui éclaire le filtre aval 413 et, à travers lui, l'élément partiellement réfléchissant 411. Si la couleur de la lumière réfléchie par l'élément partiellement réfléchissant est neutre, le symbole visible sur la touche 410 est donc le symbole « 1 » porté par le filtre aval 413, en rouge-orangé sur fond gris. De même, le symbole visible sur la touche 420 est le symbole « 2 » porté par le filtre aval 423, en gris sur fond rouge-orangé. Bien entendu, si la couleur de la lumière réfléchie par l'élément partiellement réfléchissant n'est pas neutre, la couleur du fond du symbole apparaissant sur la touche 310 et la couleur du symbole apparaissant sur la touche 320 seront différentes.

Lorsque le moyen de modulation 440 commande l'allumage de la diode électroluminescente 432, la source de lumière émet des rayons lumineux dont les longueurs d'onde se trouvent entre 550 et 700 nanomètres. Les rayons lumineux émis par la source de lumière sont absorbés dans la forme du symbole porté par le filtre amont 414 et traversent ce filtre en dehors de la forme de ce symbole puisque le spectre d'absorption du filtre amont 414 correspond au spectre d'émission de la diode électroluminescente 432. Les rayons lumineux émis par la source de lumière traversent le filtre aval 413 aussi bien en dehors du symbole représenté par ce filtre que dans ce symbole puisqu'il est transparent aux rayons du spectre d'émission de la diode électroluminescente 432.

Pour la touche 410, le symbole visible est donc le symbole porté par le filtre amont 414, ici « > », qui apparaît en noir sur fond orangé.

De la même manière, pour la touche 420, le symbole visible est le symbole porté par le filtre amont 424, ici « < », qui apparaît en orangé sur fond noir.

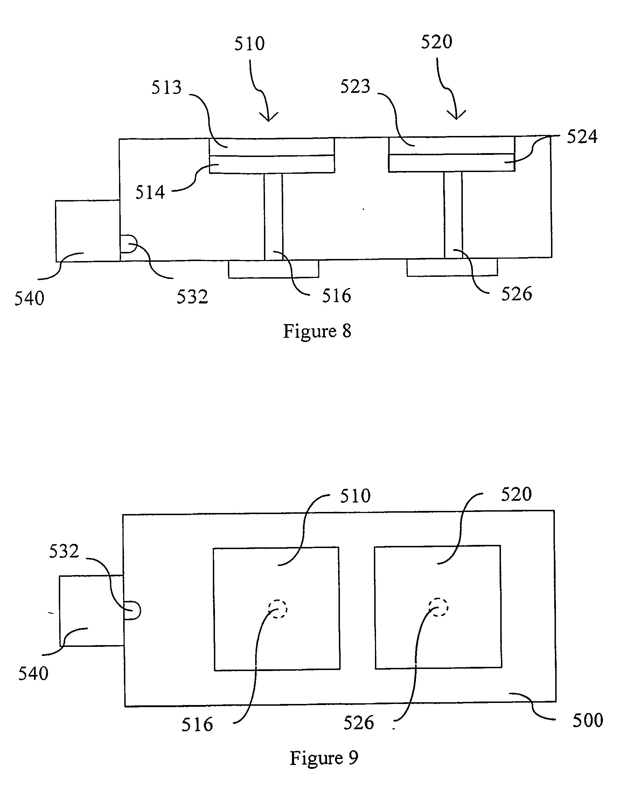

On observe, en figures 8 et 9, un clavier 500 comportant des touches 510 et 520, munies de filtres, respectivement aval 513 et amont 514, touche 510, et filtres aval 523 et amont 524, touche 520, et de contacteurs électriques, respectivement 516 et 526. Une source de lumière est constituée d'une diode électroluminescente 532 commandée par un moyen de modulation 540.

Pour la touche 510, en partant de l'extérieur, en haut sur la figure 8, se trouvent successivement le filtre aval 513, qui comporte un élément partiellement réfléchissant" et le filtre amont 514. Pour la touche 520, en partant de l'extérieur, en haut sur la figure 8, se trouvent successivement le filtre aval 523, qui comporte un élément partiellement réfléchissant 521, et le filtre amont 524.

Les contacteurs électriques 516 et 526 effectuent un contact électrique entre leurs bornes lorsque l'on presse ou appuie sur les touches 510 et 520, respectivement. Le moyen de modulation 540 est un commutateur électrique qui allume ou éteint la diode électroluminescente 532. La diode électroluminescente 532 émet des rayons lumineux dont les longueurs se trouvent entre 550 et 700 nanomètres.

Les filtres aval 513 et amont 514, d'une part, et les filtres aval 523 et amont 524, d'autre part, sont superposés, c'est-à-dire qu'ils se trouvent successivement placés sur le chemin optique des rayons lumineux issus de la diode électroluminescente 532. Sur les filtres aval 513 et amont 514 sont formés des symboles différents, par exemple « 1 », et « > ». Le filtre amont 514 est transparent en dehors de la forme du symbole qu'il porte et possède, dans la forme de ce symbole, un spectre d'absorption correspondant au spectre d'émission de la diode électroluminescente 532. Le filtre aval 513 est partiellement réfléchissant en dehors de la forme du symbole qu'il porte et est transparent ou gris dans la forme de ce symbole. Préférentiellement, la transparence du filtre aval 513 est sensiblement uniforme sur sa surface pour les longueurs d'ondes émises par la diode électroluminescente 532.

L'ensemble optique de la touche 520 est similaire à celui de la touche 510, à ceci près que les symboles portés par les filtres aval 523 et amont 524, respectivement « 2 » et « < », sont en négatif : pour le filtre aval 523, la partie réfléchissante est dans le symbole et, pour le filtre amont 524, l'absorption de longueurs d'onde se faisant en dehors de la forme du symbole et la transparence étant réalisée dans la forme de ce symbole.

Lorsque le moyen de modulation 540 ne commande pas l'allumage de la diode électroluminescente 532, c'est l'éclairage ambiant qui éclaire le filtre aval 513 et se reflète en dehors de la forme du symbole. Le symbole visible sur la touche 510 est donc le symbole « 1 », en noir sur fond gris. De même, le symbole visible sur la touche 520 est le symbole « 2 » porté par le filtre aval 523, en gris sur fond noir.

Lorsque le moyen de modulation 540 commande l'allumage de la diode électroluminescente 532, la source de lumière émet des rayons lumineux dont les longueurs d'onde se trouvent entre 550 et 700 nanomètres. Les rayons lumineux émis par la source de lumière sont absorbés dans la forme du symbole porté par le filtre amont 514 et traversent ce filtre en dehors de la forme de ce symbole puisque le spectre d'absorption du filtre amont 514 correspond au spectre d'émission de la diode électroluminescente 532. Les rayons lumineux émis par la source de lumière traversent le filtre aval 513 aussi bien en dehors du symbole représenté par ce filtre que dans ce symbole puisque le filtre aval 513 possède est partiellement transparent ou totalement transparent aux rayons du spectre d'émission de la diode électroluminescente 532, sur l'ensemble de sa surface. Pour la touche 510, le symbole visible est donc le symbole porté par le filtre amont 514, ici « > », qui apparaît en noir sur fond orangé. De la même manière, pour la touche 520, le symbole visible est le symbole porté par le filtre amont 524, ici « < », qui apparaît en orangé sur fond noir. Lorsque, comme c'est préférentiel, la transparence des filtres avals 513 et 523 est uniforme sur l'ensemble de leur surface, pour les longueurs d'onde émises par la diode électroluminescente 532, les formes des symboles portés par ces filtres sont totalement invisibles en l'absence de lumière ambiante.

On comprend aisément que le nombre de filtres se trouvant en dessous du filtre aval 513 (respectivement 523) n'est pas limité à un et n'est limité que par le nombre de commutation possibles de la source de lumière. Par exemple, la source de lumière peut comporter deux diodes électroluminescentes et deux filtres correspondant peuvent être positionnés en dessous du filtre aval 513 (respectivement 523).

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 400 ou 500, soit un symbole, soit un autre, l'un de ces symboles étant affiché, par défaut, lorsque la source de lumière est éteinte.

Les éléments partiellement réfléchissants illustrés aux figures 2 à 9 peuvent être constitués de films métallisés ou de surfaces dépolies, par exemple.

Les filtres mis en oeuvre, dans les différents modes de réalisation sont préférentiellement des filtres de réjection obtenus par des techniques d'impression, éventuellement en polychromie, par exemple en trichromie ou en quadrichromie.

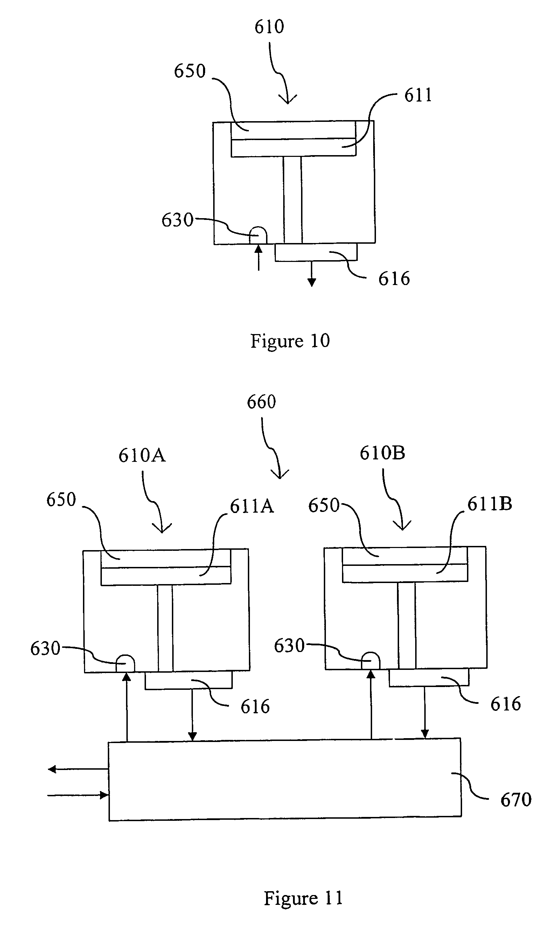

On observe, en figure 10, un dispositif d'affichage constitué d'une touche 610 comportant une source de lumière 630, un filtre amont 611 portant un message, un élément partiellement réfléchissant 650 et un contacteur électrique 616.

La source de lumière 630 est, par exemple, une diode électroluminescente. Le filtre amont 611 est, par exemple, constitué d'un support transparent sur lequel a été imprimé un message, en noir sur fond transparent ou en transparent sur fond noir, par exemple un symbole de clavier ou un icône de fonction. L'élément partiellement réfléchissant est, par exemple, une surface dépolie et/ou un support imprimé avec une encre de couleur gris métallisé partiellement transparente.

Le contacteur électrique 616 est similaire aux contacteurs électriques décrits ci-dessus. Il est adapté à détecter une interaction d'un utilisateur avec la touche 610, par appui sur la surface supérieur de cette touche, par exemple.

Le dispositif d'affichage 610 comporte ainsi une touche comportant :
- au moins un filtre amont 611 portant à un message à afficher sur la touche,
- une source de lumière 630 adaptée à éclairer ledit filtre, par rétro-éclairage,
- un élément partiellement réfléchissant 650 placé en aval du filtre amont 611 et
- un moyen de détection d'interaction 616, adapté à fournir un signal représentatif de l'interaction entre un utilisateur et ladite touche,
de telle manière que, lorsque la source de lumière 630 est éteinte, le message porté par le filtre amont 611, masqué par l'élément partiellement réfléchissant 650, n'est pas visible et, lorsque la source de lumière 630 est allumée, le message porté par le filtre amont 611 est visible.

Une telle touche 610 peut avoir beaucoup d'applications, par exemple, dans un tableau de bord d'un véhicule, dans un tableau de commande de machine ou d'équipement bureautique, par exemple. Dans des modes d'utilisation, selon l'état du système et/ou les commandes disponibles à un moment donné, on affiche, ou non, le message porté par le filtre amont 611, en allumant la source de lumière 630. L'utilisateur peut alors déclencher une fonction associée à ce message en interagissant avec ladite touche.

L'utilisateur ne voit alors affichés que les messages correspondant à des fonctions disponibles à un instant donné. Il est alors moins distrait par d'autres affichages « inutiles » et plus efficace dans son action.

Dans des modes d'utilisation, l'interaction, par exemple l'appui sur la touche 610 provoque un basculement de l'état visuel, par changement d'état de la source de lumière 630 et de la fonction correspondant au prochaine appui sur cette touche.

L'affichage sur la touche est alors, en permanence en cohérence avec fonction de touche et avec l'état du système à commander et son changement d'état potentiel que l'utilisateur peut commander.

On observe, en figure 11, un clavier 660 comportant deux touches 610A et 610B, similaires à la touche 610 illustrée en figure 10 dont les filtres amonts 611A et 611B, respectivement, portent des messages différents. Le clavier 660 comporte aussi un circuit de gestion de touche 670.

En figure 11, on n'a représenté que deux touches mais le nombre de touches n'est pas limité et peut, par exemple, atteindre le nombre de touches d'un clavier d'ordinateur, soit plus d'une centaine de touches portant autant de messages différents, par exemple des symboles.

Le circuit de gestion de touches 670 est adapté à commander individuellement, les sources de lumière 630 de toutes les touches et à recevoir et traiter tous les signaux provenant des contacteurs 616. On observe que le circuit de gestion de touches 670 peut être physiquement incorporé dans un clavier, par exemple sous la forme d'un microcontrôleur doté d'un logiciel adéquat, ou être implémenter par un logiciel d'un système électronique comportant un circuit programmable, tel que l'un de ceux décrits en regard de la figure 1.

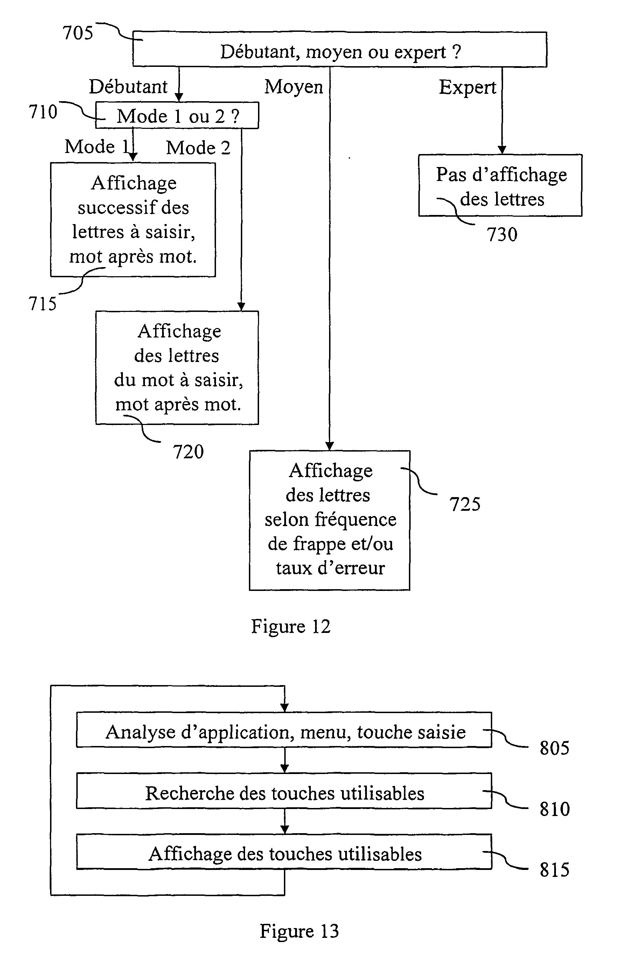

Dans des modes de réalisation, le clavier 660 est adapté à mettre en oeuvre des logiciels implémentant les logigrammes illustrés en figures 12 et/ou 13.

Le logigramme illustré en figure 12 correspond à un moyen d'apprentissage de la frappe sur clavier. Par exemple, le clavier mis en oeuvre est un clavier tel qu'illustré en figure 11, comportant le même nombre de touches qu'un clavier d'ordinateur normal, les filtres amonts des touches correspondant aux symboles portés par les touches du clavier d'ordinateur correspondant. Ainsi, lorsque toutes les sources de lumière 630 sont éteintes, aucun message n'apparaît sur les touches du clavier. En revanche, lorsque toutes les sources de lumière 630 sont allumées, tous les messages ou symboles apparaissent sur le clavier, comme pour un clavier rétro-éclairé.

Dans ce mode de réalisation, le circuit de gestion de touches 670 allume successivement différentes sources de lumière 630 pour aider l'utilisateur à mémoriser la position des touches sur un clavier d'ordinateur ou pour apprendre une langue étrangère.

Au cours d'une étape 705, on choisit le niveau de l'utilisateur, entre les niveaux « débutant », « moyen » ou « expert ». Ce choix peut être effectué par l'utilisateur, par exemple en cliquant sur un icône représentant le niveau en question. Ce choix peut aussi être effectué par défaut, en reprenant le dernier niveau utilisé. Enfin, ce choix peut être effectué automatiquement, en fonction des résultats de l'utilisateur (en terme de vitesse de saisie et/ou de taux d'erreurs effectué), pour passer au niveau supérieur.

Si le niveau « débutant » a été choisi, au cours d'une étape 710, on choisit le mode de fonctionnement entre un mode « 1 », ou « lettre à lettre » et un mode « 2 », ou « mot à mot ». Ce choix peut être effectué par l'utilisateur, par défaut ou en fonction des résultats de l'utilisateur, pour passer du mode « 1 » au mode « 2 ».

Si le mode « 1 » a été choisi, au cours d'une étape 715, on provoque l'affichage successif, lettre après lettre, des lettres de mots, formant, ou non, des mots et/ou des phrases intelligibles. Pour cela, le moyen de gestion de touches 670 allume la source de lumière 630 d'une touche comportant le filtre portant le symbole de cette lettre. Puis, lorsque l'utilisateur a saisi cette lettre en appuyant sur la touche en question, le moyen de gestion de touches 670 éteint la source de lumière précédemment allumée et allume la source de lumière correspondant à la seconde lettre à saisir et ainsi de suite jusqu'à ce que l'utilisateur arrête l'exercice ou qu'un autre niveau ou mode soit choisi.

Si le mode « 2 » a été choisi, au cours d'une étape 720, on provoque l'affichage conjoint de toutes les lettres de mots, formant, ou non, des phrases intelligibles. Pour cela, le moyen de gestion de touches 670 allume la source de lumière 630 de toutes les touches comportant le filtre portant le symbole de l'une des lettres à afficher. Puis, lorsque l'utilisateur a saisi toutes les lettres, dans l'ordre, en appuyant sur les touches en question, le moyen de gestion de touches 670 éteint les sources de lumière précédemment allumées et allume les sources de lumière correspondant aux lettres d'un second mot à saisir et ainsi de suite jusqu'à ce que l'utilisateur arrête l'exercice ou qu'un autre niveau soit choisi.

En variante du mode « 2 », à chaque fois qu'une lettre est saisie par l'utilisateur, dans le bon ordre, le moyen de gestion de touches éteint la source de lumière correspondante.

En variante, du mode « 2 », l'utilisateur doit saisir un nombre prédéterminé de fois le même mot ou jusqu'à ce que sa vitesse de frappe soit supérieure à une vitesse prédéterminée et/ou que son taux d'erreurs soit inférieur à un taux prédéterminé avant que le moyen de gestion de touches 670 n'éteigne toutes les sources de lumière, l'utilisateur devant, de nouveau saisir le mot en question avant que le moyen de gestion de touches 670 ne passe au mot suivant.

Préférentiellement, dans chacun des modes « 1 » et « 2 », les mots à saisir sont définis selon la difficulté des exercices et celle-ci va croissante.

Lorsque, au cours de l'étape 705, le niveau « moyen » est choisi, au cours d'une étape 725, au fur et à mesure de la saisie d'un texte, qui peut être libre, affiché sur un écran ou dicté par l'intermédiaire d'un haut-parleur, le moyen de gestion de touches 670 fait varier l'intensité lumineuse de toutes les sources de lumière 630.

Au début de l'exercice, le moyen de gestion de touches 670 provoque l'affichage des symboles portés par toutes les touches du clavier, en allumant toutes les sources de lumière des touches du clavier et, pendant la saisie, au delà d'une fréquence de frappe et/ou en dessous d'un taux d'erreur prédéterminés, l'intensité lumineuse émise par les sources de lumière décroît, progressivement ou brutalement, pour que les symboles portés par les filtres des touches disparaissent. Si, ensuite, la vitesse de frappe passe en dessous d'une autre vitesse prédéterminée et/ou si le taux d'erreur passe au-dessus d'un autre taux d'erreur prédéterminé, l'intensité lumineuse émise par les sources de lumière croît, progressivement ou brutalement.

Lorsque, au cours de l'étape 705, le niveau « expert » est choisi, au cours d'une étape 730, l'ensemble des sources de lumière 630 restent éteintes.

Ainsi, progressivement, l'utilisateur apprend la position des symboles sur un clavier puis se passe de regarder le clavier pour saisir ces symboles.

On observe, en figure 13, une étape 805 d'analyse d'application, de menu et/ou de touche saisie par l'utilisateur. Puis, au cours d'une étape 810, on recherche les symboles utilisables en fonction de l'application active, du menu sélectionné et ou de la ou des précédentes touches saisie par l'utilisateur.

Puis, au cours d'une étape 815, le moyen de gestion de touches provoque, par allumage de certaines sources de lumière 630 et extinction d'autres sources de lumière 630, l'affichage des seuls symboles utilisables.

Ainsi, le moyen de gestion de touches 630 est adapté à afficher uniquement les symboles dont l'utilisateur peut avoir besoin. Par exemple, lors d'une présentation avec la fonction « diaporama » du logiciel Microsoft PowerPoint (marques déposées), seul les symboles de flèches haute et basse sont affichés.

Selon un autre exemple, lorsque l'utilisateur a saisi l'un des symboles « Ctrl », « Fn », « Alt Gr » ou « Alt », seuls les touches dont les filtres portent des symboles pouvant suivre ces symboles « Ctrl », « Fn », « Alt Gr » ou « Alt » sont affichés. On aide ainsi l'utilisateur à utiliser les raccourcis et les fonctions secondaires. De même, lorsqu'un menu a été sélectionné, par exemple avec un dispositif de pointage, par exemple une souris, les seuls symboles affichés sont les symboles des lettres soulignées dans ledit menu, lettres qui correspondent à des raccourcis.

Puis, dès que l'utilisateur a saisi un symbole, par utilisation du clavier ou d'un dispositif de pointage, on retourne à l'étape 805.

Grâce à la mise en oeuvre de ce mode de réalisation du procédé objet de la présente invention illustré en figure 13, l'affichage des symboles du clavier est, en permanence en cohérence avec l'état du système à commander et ses changements d'état potentiels que l'utilisateur peut commander.

On observe que, lorsque au moins une partie des touches du clavier permet d'afficher deux messages différents non vierges, que ces deux messages soient portés par deux filtres amonts ou un filtre amont et un filtre aval, ces messages correspondant aux multiples symboles portés par les touches d'un clavier standard, le moyen de gestion de touches est adapté à provoquer l'affichage des seuls symboles qui correspondent à l'état du système. Par exemple, les lettres en majuscules ou en minuscules sont affichées selon les caractères que l'on peut saisir en fonction de l'utilisation des touches « Shift » et de blocage en majuscules. De même, les lettres avec accents ou les chiffres ne sont affichés que lorsqu'ils peuvent être saisis. Les symboles des touches de fonction ne sont affichées que lorsque la touche « Fn » a été activée.

En variante, lorsqu'une langue est utilisée par l'utilisateur et que des symboles ne sont pas utilisés dans cette langue, ils ne sont pas affichés.

En variante, l'utilisateur choisit si son clavier fonctionnera en mode « azerty » ou en mode « qwerty ».

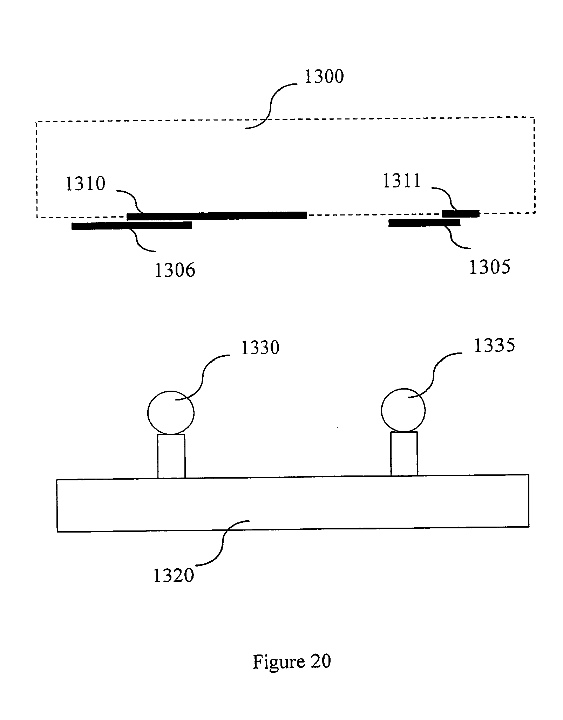

Dans le neuvième mode de réalisation du dispositif objet de la présente invention, illustré en figure 20, un filtre aval est constitué de deux parties dont les capacités de réflexion à la lumière ambiante sont différentes, par exemple, une partie miroir réflective (ou brillante) et une autre partie grise absorbante (ou mate) qui, en rétro-éclairage, ont sensiblement la même apparence. Ainsi, on peut obtenir une pluralité de messages affichés différents dont l'un est affiché en lumière ambiante, sans perturber la visualisation des autres messages à afficher.

Dans ce mode de réalisation, le filtre aval incorpore un élément partiellement réfléchissant (gris brillant) sur lequel un message est inscrit de manière peu réfléchissante ou absorbante (gris mate). Sous la lumière ambiante, le contraste formé par ces deux parties rend le message porté par le filtre aval visible. En revanche, lors d'un rétro-éclairage, ces deux parties proposent sensiblement les mêmes transmissions de lumière et permettent ainsi l'affichage d'un ou plusieurs autres messages.

Lorsque la lumière ambiante n'est pas suffisante, par exemple dans l'obscurité, une faible intensité lumineuse de rétro-éclairage permet de rendre visible le message porté sur le filtre aval. Ce rétro-éclairage peut être le fait de la source de lumière exposée dans les autres modes de réalisation ou d'une source de lumière additionnelle, préférentiellement neutre par rapports à chaque filtre amont.

Par exemple, on peut obtenir, sur la même surface d'affichage, par exemple sur une touche :
- un premier message apparaissant par défaut sans rétro-éclairage,
- le même premier message avec rétro-éclairage avec un rétro-éclairage constitué d'une combinaison des lumières émises par deux sources de lumière,
- un deuxième message en rétro-éclairage par l'une des deux sources de lumière et
- un troisième message en rétro-éclairage par l'autre des deux sources de lumière.

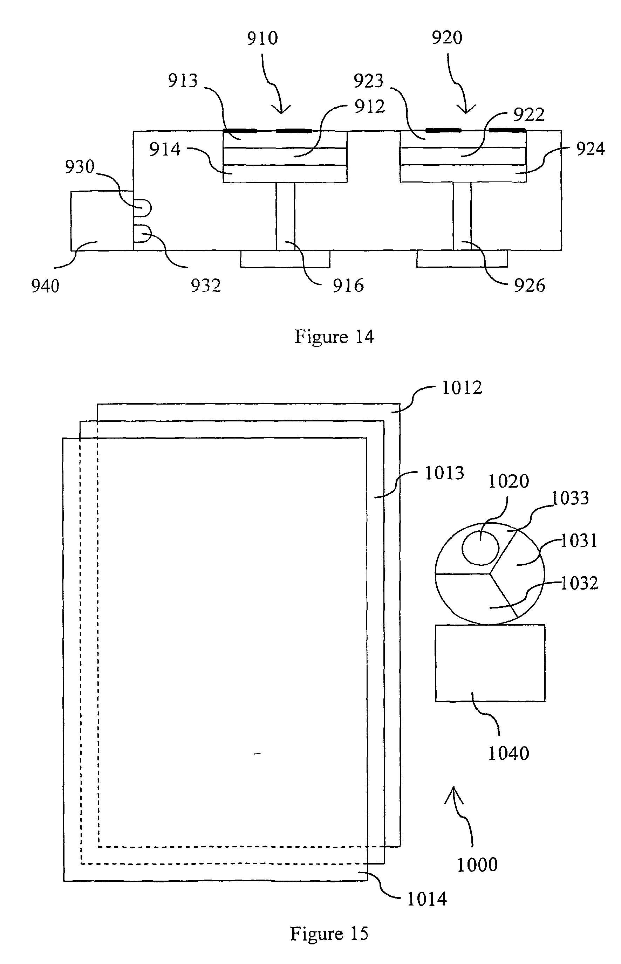

On observe, en figure 14, un clavier 900 comportant des touches 910 et 920, munies d'un filtre aval et élément partiellement réfléchissant respectivement 913, touche 910, et 923, touche 920, portant des messages, de filtres, respectivement 912 et 914, touche 910, et 923 et 924, touche 920, et de contacteurs électriques, respectivement 916 et 926. Une source de lumière est constituée de deux diodes électroluminescentes 930 et 932 commandées par un moyen de modulation 940.

Les filtres avals 913 et 923 sont de couleur uniforme mais d'aspects surfacique hétérogènes. Par exemple, les parties indiquées en gras sur la surface extérieure des filtres avals 913 et 923 sont males alors que le reste de cette surface est brillant.

Les diodes électroluminescentes émettent dans des bandes spectrales différentes, préférentiellement disjointes. Par exemple, la diode électroluminescente 930 émet des rayons lumineux dont les longueurs se trouvent entre 400 et 550 nanomètres et la diode électroluminescente 932 émet des rayons lumineux dont les longueurs se trouvent entre 550 et 700 nanomètres.

Lorsque le moyen de modulation 940 ne commande l'allumage d'aucune des diodes électroluminescentes, c'est l'éclairage ambiant qui éclaire le filtre aval et élément partiellement réfléchissant 913 et fait apparaître le message porté par l'hétérogénéité de sa surface.

Lorsque le moyen de modulation 940 commande l'allumage des diodes électroluminescentes 930 et 932 avec une faible intensité lumineuse, c'est ce rétro-éclairage qui éclaire le filtre aval et élément partiellement réfléchissant 913 et fait apparaître le message porté par l'hétérogénéité de sa surface.

Lorsque le moyen de modulation 940 commande l'allumage de la diode électroluminescente 930 et l'extinction de la diode électroluminescente 932, pour la touche 910, le symbole visible est le symbole porté par le filtre amont 912, comme exposé en regard d'autres figures.

Lorsque le moyen de modulation 940 commande l'allumage de la diode électroluminescente 932 et l'extinction de la diode électroluminescente 930, pour la touche 910, le symbole visible est le symbole porté par le filtre amont 914, comme exposé en regard d'autres figures.

Ainsi, grâce à la mise en oeuvre de la présente invention, par la modulation d'une caractéristique physique de la lumière émise par la source de lumière, ici la longueur d'onde des rayons émis, on fait apparaître, sur chaque touche du clavier 900, soit un symbole, soit un autre, l'un de ces symboles étant affiché, par défaut, lorsque la source de lumière est éteinte.

En variante du deuxième mode de réalisation, illustré en figure 14, le filtre amont 912 est éliminé et la source de lumière n'est pas modulée en gammes spectrales.

La figure 15 représente, schématiquement, un afficheur objet de la présente invention pour afficher différents messages, par exemple publicitaires, de signalisation routière, artistiques, d'horaires de transports en commun.

Dans le mode de réalisation de cet affichage, on utilise des filtres chromatiques portant, chacun un message à afficher et, pour faire apparaître un message donné, on module la bande spectrale d'émission d'une source de lumière.

On observe, en figure 15, un panneau d'affichage 1000 comportant des affiches-filtres 1012, 1013 et 1014. Une source de lumière est constituée d'une source de lumière blanche 1020 associée à un carrousel portant trois filtres chromatiques 1031, 1032 et 1033, mis en mouvement par un moteur commandé par un moyen de modulation 1040 pour que l'un ou l'autre des filtres se trouve en regard de la source de lumière 1020.

Les filtres chromatiques 1031, 1032 et 1033 sont adaptés à laisser passer la lumière dans trois bandes spectrales différentes, préférentiellement disjointes. Par exemple, le filtre 1031 est transparent aux rayons lumineux dont les longueurs se trouvent entre 400 et 500 nanomètres, le filtre 1032 est transparent aux rayons lumineux dont les longueurs se trouvent entre 500 et 600 nanomètres et le filtre 1033 est transparent aux rayons lumineux dont les longueurs se trouvent entre 600 et 700 nanomètres.

Les affiches 1012 à 1014, qui constituent des filtres, éventuellement diffusant, sont superposées, c'est-à-dire qu'elles se trouvent successivement placés sur le chemin optique des rayons lumineux issus de la source de lumière 1020. Les affiches 1012 à 1014 portent chacune un message, ces messages étant, éventuellement, combinés, c'est-à-dire que leur constitution est coordonnée pour qu'au moins deux messages portés par deux affiches forment un nouveau message.

Les affiches 1012 à 1014 sont respectivement transparentes en dehors des messages et possèdent, dans la forme des messages, des spectres d'absorption correspondant respectivement sensiblement aux trois spectres de transparence des filtres 1031, 1032 et 1033.

Lorsque le moyen de modulation 1040 provoque le positionnement du filtre 1031 devant la source de lumière blanche 1020, la source de lumière émet des rayons lumineux dont les longueurs d'onde se trouvent entre 400 et 500 nanomètres. Les rayons lumineux émis par la source de lumière traversent l'affiche 1012 en dehors du message représenté par ce filtre et sont absorbés dans ce message puisque son spectre d'absorption correspond au spectre d'éclairage. Puis, les rayons restants traversent les affiches 1013 et 1014 aussi bien dans la forme du message porté par ces affiches qu'en dehors de ces messages puisque ces affiches sont transparentes dans le spectre d'éclairage. Le message affiché est donc celui porté par l'affiche 1012, qui apparaît en noir sur fond bleu.

Lorsque le moyen de modulation 1040 provoque le positionnement du filtre 1032 devant la source de lumière blanche 1020, la source de lumière émet des rayons lumineux dont les longueurs d'onde se trouvent entre 500 et 600 nanomètres. Les rayons lumineux traversent l'affiche 1012, aussi bien dans la forme du message porté par cette affiche qu'en dehors de ce message puisque cette affiche est transparente dans le spectre d'éclairage.

Les rayons lumineux traversent ensuite l'affiche 1013 en dehors du message représenté par cette affiche et sont absorbés dans ce message puisque son spectre d'absorption correspond au spectre d'éclairage. Puis, les rayons restants traversent l'affiche 1014 aussi bien dans la forme du message porté par cette affiche qu'en dehors de ce message puisque cette affiche est transparente dans le spectre d'éclairage. Le message visible est donc le message porté par l'affiche 1013, qui apparaît en noir sur fond vert.

Lorsque le moyen de modulation 1040 provoque le positionnement du filtre 1033 devant la source de lumière blanche 1020, la source de lumière émet des rayons lumineux dont les longueurs d'onde se trouvent entre 600 et 700 nanomètres.

Les rayons lumineux émis par la source de lumière traversent les affiches 1012 et 1013 aussi bien dans la forme du message porté par ces affiches qu'en dehors de ces messages puisque ces affiches sont transparentes dans le spectre d'éclairage.

Les rayons lumineux traversent ensuite l'affiche 1014 en dehors du message représenté par cette affiche et sont absorbés dans ce message puisque son spectre d'absorption correspond au spectre d'éclairage.

Le message visible est donc le message porté par l'affiche 1014, qui apparaît en noir sur fond rouge.

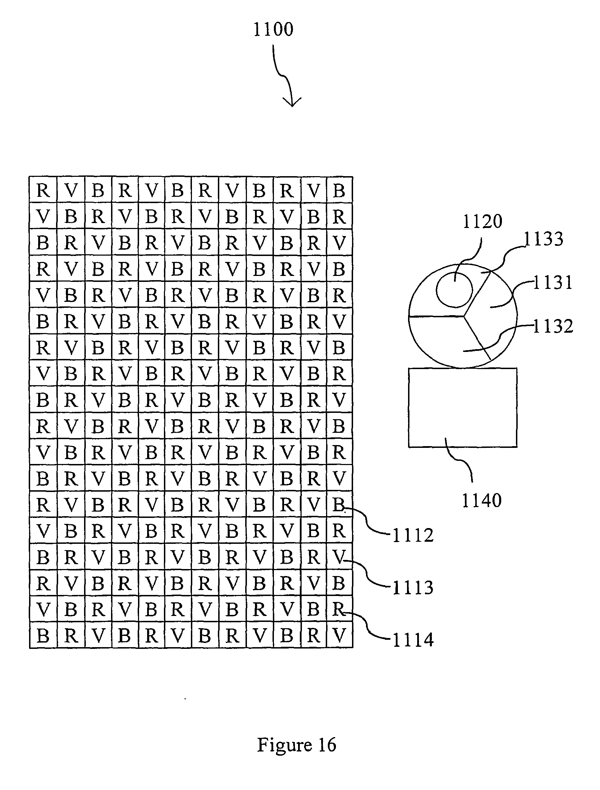

La figure 16 représente, schématiquement, un afficheur objet de la présente invention pour afficher différents messages, par exemple publicitaires, de signalisation routière, artistiques, d'horaires de transports en commun.

Dans le mode de réalisation de cet affichage, on utilise des filtres chromatiques portant, chacun un message à afficher et, pour faire apparaître un message donné, on module la bande spectrale d'émission d'une source de lumière.

On observe, en figure 16, un panneau d'affichage 1100 comportant des ensembles de filtres, ici carrés, juxtaposés et alternés 1112, 1113 et 1114. Une source de lumière est constituée d'une source de lumière blanche 1120 associée à un carrousel portant trois filtres chromatiques 1131, 1132 et 1133, mis en mouvement par un moteur commandé par un moyen de modulation 1140 pour que l'un ou l'autre des filtres 1131, 1132 et 1133 se trouve en regard de la source de lumière 1120.

Les filtres chromatiques 1131, 1132 et 1133 sont adaptés à laisser passer la lumière dans trois bandes spectrales différentes, préférentiellement disjointes. Par exemple, le filtre 1131 est transparent aux rayons lumineux dont les longueurs se trouvent entre 400 et 500 nanomètres, le filtre 1132 est transparent aux rayons lumineux dont les longueurs se trouvent entre 500 et 600 nanomètres et le filtre 1133 est transparent aux rayons lumineux dont les longueurs se trouvent entre 600 et 700 nanomètres.

Les ensembles de filtres ou affiches 1112 à 1114 portent chacun un message, ces messages étant, éventuellement, combinés, c'est-à-dire que leur constitution est coordonnée pour qu'au moins deux messages portés par deux ensembles de filtres ou affiches forment un nouveau message.

Les ensembles de filtres 1112 à 1114 sont respectivement absorbants en dehors des messages et possèdent, dans la forme des messages, des spectres de transmission correspondant respectivement sensiblement aux trois spectres de transparence des filtres 1131, 1132 et 1133.

On comprend que, selon le filtre 1131, 1132 ou 1133 qui se trouve devant la source de lumière 1120, les messages visibles sont ceux portés par les ensembles de filtres 1112, 1113 ou 1114, respectivement.

En variante, on met en oeuvre au moins deux sources de lumière pour créer des effets d'animation de ce qui apparaît affiché, par exemple de fondu-enchaîné ou de transition progressive, d'un point ou d'un côté à l'ensemble de la surface d'affichage entre les messages susceptibles d'êtres affichés. En variantes, les messages sont combinés, au moins deux messages portés par deux ensembles de filtres juxtaposés en alternance étant associés, par exemple dans un message publicitaire en deux couleurs. L'utilisation de deux sources de lumière permet alors de faire apparaître successivement les différentes couleurs du même message pour attirer le regard.

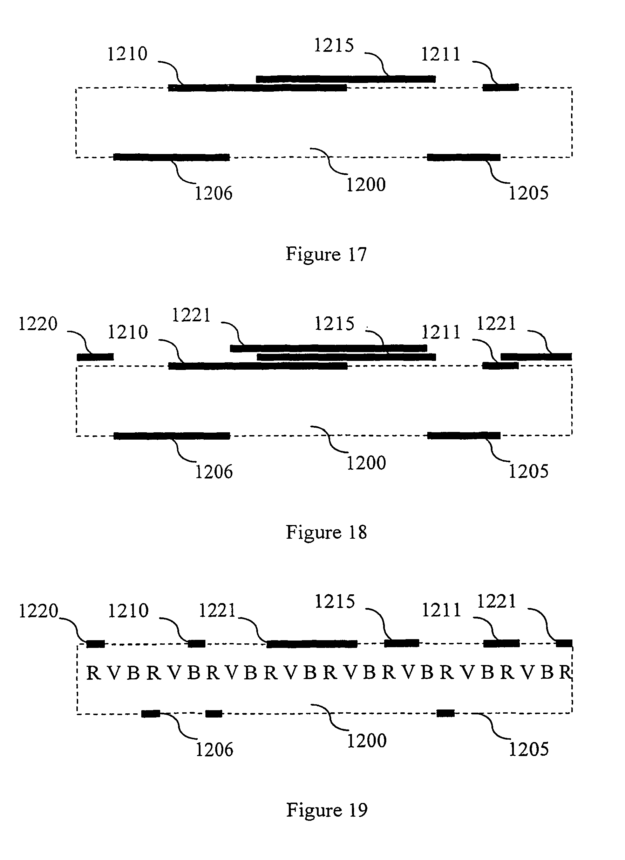

On observe, en figures 17 à 19, une affiche imprimée sur chaque face avec des couleurs différentes sur les différentes faces représentant différents symboles ou messages ou des éléments de messages coordonnés. Les échelles ne sont pas respectées et seule une petite partie de l'affiche est représentée, en coupe, sous forme d'un rectangle 1200 en traits discontinus. Les traits épais, en noir, représentent les différentes zones ayant reçu de l'encre. On a supposé, ici, que seules trois gammes spectrales étaient utilisées, par exemple :
- une gamme spectrale autour du rouge, en face avant de chacune des affiches (en bas de chacune des figures) et, éventuellement aussi en face arrière (figures 18 et 19) et
- deux gammes spectrales, respectivement autour du vert et autour du bleu, en face arrière de chacune des affiches (en haut sur chacune des figures).

En figure 17, les encres se superposent sur la face arrière. Les zones ayant reçu de l'encre rouge sont référencées 1205 et 1206. Les zones ayant reçu de l'encre verte sont référencées 1210 et 1211 et la zone ayant reçu de l'encre bleue est référencée 1215. On comprend que ces zones sont indépendantes et peuvent représenter des symboles ou messages indépendants ou coordonnés.

En figure 18, on retrouve les mêmes éléments qu'en figure 17, auxquels s'ajoutent, en face arrière, des zones 1220 et 1221, encrées en rouge, de la même encre que les zones 1205 et 1206 mais formant leur complément de telle manière que pour chaque partie de l'affiche qui est encrée en rouge en face avant, elle n'est pas encrée en rouge en face arrière, et réciproquement.

En figure 19, les encres présentent les mêmes symboles et messages qu'en figure 18, avec les mêmes couleurs, mais elles ne se superposent pas, formant ainsi des filtres juxtaposés en alternance.

A la lumière ambiante, lorsque la source de lumière de rétro-éclairage est éteinte, seul ce qui est imprimé sur la face avant est visible. De nuit, lorsque la source de lumière de rétro-éclairage est allumée et émet, sur au moins une partie de l'affiche, les couleurs correspondant à deux des gammes spectrales, seul le message correspondant à la troisième gamme spectrale est visible. De nuit, lorsque la source de lumière de rétro-éclairage est allumée et émet, sur au moins une partie de l'affiche, les couleurs correspondant à une seule des gammes spectrales, seuls les messages correspondant aux autres gammes spectrales sont visibles.

En ce qui concerne les modes de réalisation illustrés aux figures 18 et 19, un rétro-éclairage avec une lumière blanche fait disparaître le message porté par l'encre de couleur rouge puisque toutes les parties de l'affiche portent une couche d'encre de couleur rouge, soit en face avant, soit en face arrière et les messages portés par les deux autres couleurs apparaissent.

On observe que l'utilisation de la face avant pour afficher un message ou symbole lorsque la source de lumière est éteinte ne se limite pas aux affiches mais peut être mise en oeuvre aussi bien dans les affiches que dans les boutons poussoirs, dans les claviers ou dans les autres applications de la présente invention détaillées dans la description.

En variante des modes de réalisation, illustrés en figures 15 ou 16, la source de lumière comporte trois lampes émettant dans trois spectres visibles ou sont associées, chacune, à un filtre chromatique.

On observe ici que le nombre d'affiches-ensembles de filtres pouvant être juxtaposées et le nombre de spectres d'émission correspondants ne sont pas limités à trois mais peuvent atteindre le nombre de bandes spectrales différentes que la source de lumière et les filtres chromatiques peuvent avoir, par exemple dix, si des bandes spectrales disjointes couvrent chacune une largeur de spectre de trente nanomètres et que les affiches-filtres possèdent un spectre d'absorption correspondant aux spectres d'émission possibles de la source de lumière.

On observe qu'il peut être effectué un fondu-enchaîné entre les messages portés par les affiches, en réduisant progressivement l'intensité lumineuse émise dans une bande spectrale et en augmentant progressivement l'intensité lumineuse émise dans une autre bande spectrale ou en commandant indépendamment les intensités lumineuses dans les différentes bandes spectrales d'émission.

On peut aussi réaliser des effets d'animation, par un séquencement des sources de lumière mises en oeuvres en regard des différentes parties des affiches.
Le même principe peut être mis en oeuvre dans des jouets ou des articles de gadgeterie, par exemple des stylos avec une image animée en fonction de la ou des sources lumineuses qui sont allumées.

On observe, en figure 20, une affiche 1300 imprimée sur sa face amont, la matière de l'affiche formant élément partiellement réfléchissant. L'impression des différents messages est faite avec des couleurs différentes. Les échelles ne sont pas respectées et seule une petite partie de l'affiche est représentée, en coupe, sous forme d'un rectangle 1300 en traits discontinus. Les traits épais, en noir, représentent les différentes zones ayant reçu de l'encre. On a supposé, ici, que seules deux gammes spectrales étaient utilisées, par exemple deux gammes spectrales, respectivement autour du vert et autour du bleu, en face arrière de chacune des affiches (en haut sur chacune des figures).

En figure 20, les encres se superposent sur la face arrière. Les zones ayant reçu de l'encre rouge sont référencées 1305 et 1306. Les zones ayant reçu de l'encre verte sont référencées 1310 et 1311. On comprend que ces zones sont indépendantes et peuvent représenter des symboles ou messages indépendants ou coordonnés.

L'affiche 1300 est éclairée par rétro-éclairage par deux sources de lumière 1330 et 1335 commandées en allumage et en gammes spectrales émises indépendamment l'une de l'autre, par un circuit de commande 1320. Dans des variantes, une cloison optique peut séparer les différentes zones de l'affiche 1300 qui doivent être éclairées par différentes sources de lumière.

A la lumière ambiante, lorsque chaque source de lumière de rétro-éclairage est éteinte, l'affiche paraît de couleur uniforme. De nuit, lorsque la source de lumière de rétro-éclairage est allumée et émet, sur au moins une partie de l'affiche, une lumière plus intense que la lumière ambiante, dont les couleurs correspondant à une seule des gammes spectrales, seuls les messages correspondant aux autres gammes spectrales sont visibles. En faisant varier les gammes spectrales des sources de lumière, zone par zone ou globalement, le circuit de commande 1320 fait varier les messages qui apparaissent sur la surface de l'affiche.

On observe que l'affiche en question peut être une affiche quelconque non spécifiquement prévue pour être incorporée dans ce mode de réalisation du dispositif objet de la présente invention, la gestion, zone par zone ou globalement, des intensités lumineuses et des gammes spectrales émises permettant d'animer l'affiche en faisant successivement apparaître des parties du message affiché, pour en accentuer l'effet et/ou pour attirer le regard.

Comme on le voit, dans chacun des modes de réalisation de clavier, la commutation du mode de fonctionnement d'un dispositif et la commutation des symboles affichés se produisent de manière coordonnée, préférentiellement simultanément, sous le contrôle d'un moyen de commande, comme exposé en regard de la figure 1. Au moment de la saisie d'un symbole par l'utilisateur, le symbole affiché sur la touche de clavier utilisée est le symbole pris en compte par l'application informatique mise en oeuvre par le dispositif.

On expose, ci-dessous, différentes variantes de modes de réalisation conformes à la présente invention. Pour plus d'information, le lecteur pourra se reporter à la lecture de la demande internationale PCT FR 0500297 déposée le 10 février 2005 au nom de M. David Luo., publiée sous WO 2005 078 563 A2.

Dans une première variante, on utilise des filtres polariseurs sur lesquels sont formés différents messages et, pour faire apparaître un symbole donné, on module la direction de polarisation principale d'émission d'une source de lumière.

En deuxième variante, on utilise des dioptres qui forment des éléments d'image de différents messages et, pour faire apparaître un symbole donné, on module la direction de provenance des rayons lumineux de la source de lumière. Par exemple, les ensembles de dioptres sont constitués de réseaux de rayures orientées.

En troisième variante, on utilise des traitements multicouches qui, selon la longueur d'onde de la lumière incidente, sont soit très réfléchissants, soit très peu réfléchissants et qui sont appliqués à des éléments d'image de différents messages. Pour faire apparaître un message donné, on module la longueur d'onde des rayons lumineux émis par la source de lumière.

En quatrième variante, on utilise des composés photoluminescents formant différents messages et, pour faire apparaître un message donné, on module la bande spectrale d'émission d'une source de lumière. On rappelle ici qu'un composé photoluminescent est un composé chimique qui présente la particularité d'émettre de la lumière dans un premier spectre (ici un spectre visible) lorsqu'il est éclairé par de la lumière dans un deuxième spectre (ici un spectre de lumière infrarouge et/ou visible).

En cinquième variante, on utilise des images holographiques de différents messages, images qui apparaissent lorsque la direction des rayons incidents correspond à leur angle de référence. Pour faire apparaître un message donné, on module la direction de provenance des rayons lumineux de la source de lumière pour faire correspondre cette direction avec l'une de celles qui servent de référence pour la formation des hologrammes.

En sixième variante, on utilise des ensembles de filtres juxtaposés en alternance, c'est-à-dire qu'entre deux filtres d'un premier ensemble se trouve un filtre du deuxième ensemble, et réciproquement et que ces ensembles de filtres se trouvent, optiquement, en parallèle sur les chemins optiques des rayons lumineux issus des sources de lumière. Sur chacun des ensembles de filtres est formé un message différent.

En septième variante, on utilise des ensembles de filtres polariseurs possédant, dans le même ensemble, le même axe de polarisation et un axe de polarisation perpendiculaire à l'autre ensemble de filtres polariseurs. Sur ces ensembles de filtres polariseurs sont formés différents messages et, pour faire apparaître un message donné, on module la direction de polarisation principale d'émission d'une source de lumière. On observe que, pour former des symboles sur filtres polarisants, on peut prendre des filtres polariseurs et détruire localement leur capacité de polarisation.

En huitième variante, on utilise des conducteurs optiques (par exemple des fibres optiques) parallèles partiellement dépolis pour former différents messages et, pour faire apparaître un message donné, on émet de la lumière dans l'un ou l'autre des conducteurs optiques.

On observe que, pour mettre en oeuvre la présente invention, on peut fractionner un clavier en plusieurs ensembles de touches, chaque ensemble de touches mettant en oeuvre l'un des modes de réalisation de la présente invention, par exemple l'un des modes de réalisation présentés ci-dessus, notamment lorsque le nombre de messages varie selon les touches du clavier.

On observe aussi que les messages à afficher peuvent être prévus à la construction du clavier ou, dans des modes de réalisation particuliers, ces messages peuvent être réalisés à posteriori, sur des supports vierges et inscriptibles, par exemple constitués d'au moins une couche de filtre sensible à une grandeur physique, par exemple la chaleur, par exemple fournie par un rayon laser dont le générateur prend la forme d'un stylo.

Pour tous les modes de réalisation exposés ci-dessus incorporant des filtres absorbants des rayons lumineux de certaines longueurs d'onde, ces filtres peuvent être des filtres interférentiels dans lesquels des couches de matériaux d'indice optique différents sont superposées, ou, préférentiellement, pour des raisons de facilité de réalisation, des gélatines, des supports transparents ou translucides sur lesquels des motifs, symboles ou messages sont imprimés avec des encres de couleurs ou marqués avec un marqueur délivrant une encre colorée ou une craie de couleur.

## Revendications

1. Dispositif d'affichage qui comporte :
- au moins un filtre dit « amont » (212, 214, 1306) portant un message à afficher,
- au moins un deuxième filtre (213, 1310) portant un message à afficher différent du message porté par chaque filtre amont,
- une source de lumière (230, 232, 240, 1320, 1330) adaptée à éclairer chaque dit filtre, par rétro-éclairage,
**Caractérisé en ce qu'**il comporte un élément partiellement réfléchissant (211, 1300) placé en aval d'au moins le filtre amont et intégré dans le deuxième filtre (213) ou placé en amont du deuxième filtre (213), de telle manière que, lorsque la source de lumière est éteinte, le message porté par chaque filtre amont, masqué par l'élément partiellement réfléchissant, n'est pas visible et, le message porté par le deuxième filtre est visible et, lorsque la source de lumière est allumée, un message porté par un filtre amont est visible.

2. Dispositif selon la revendication 1, **caractérisé en ce que** l'élément partiellement réfléchissant est intégré dans le deuxième filtre (513), le contour du message à afficher étant défini par le contour d'une zone partiellement réfléchissante intégrée audit deuxième filtre.

3. Dispositif selon l'une quelconque des revendications 1 à 2, **caractérisé en ce qu'**au moins deux desdits filtres (212, 213, 214) sont superposés dans la surface d'affichage.

4. Dispositif selon l'une quelconque des revendications 1 à 3, **caractérisé en ce qu'**au moins deux desdits filtres (1112, 1113, 1114) sont constitués, chacun d'un ensemble de filtres, lesdits ensembles de filtres étant juxtaposés en alternance dans la surface d'affichage.

5. Dispositif selon l'une quelconque des revendications 1 à 4, **caractérisé en ce qu'**il comporte au moins un contacteur (216) adapté à fournir un signal représentatif de l'interaction entre un utilisateur et au moins une partie de la surface d'affichage.

6. Dispositif selon la revendication 5, **caractérisé en ce qu'**il comporte une pluralité de touches (210, 220) comportant un dit contacteur (216, 226).

7. Dispositif d'affichage selon l'une quelconque des revendications 1 à 6, **caractérisé en ce qu'**il comporte un moyen de modulation (240) d'au moins une caractéristique physique de ladite source de lumière (230, 232), au moins deux filtres correspondant, chacun, à une valeur de caractéristique physique modulée par le moyen de modulation et à un message à afficher sur ladite surface d'affichage.

8. Dispositif selon la revendication 7, **caractérisé en ce que** le moyen de modulation (240) est adapté à faire varier la bande spectrale lumineuse qui parvient aux dits filtres et les dits filtres présentent des bandes spectrales de transparence différentes.

9. Dispositif d'affichage selon l'une quelconque des revendications 7 ou 8, **caractérisé en ce que** la source de lumière comporte au moins deux transducteurs électro-optiques indépendants (230, 232) placés en parallèle sur un chemin optique de rayons lumineux provenant de la source de lumière et parvenant à la surface d'affichage, le moyen de modulation étant adapté à commander alternativement l'émission de lumière par l'un ou l'autre des transducteurs étectro-optiques.

10. Dispositif d'affichage selon l'une quelconque des revendications 7 à 9, **caractérisé en ce que** le moyen de modulation (240) est adapté à faire varier un axe de polarisation principal des rayons lumineux atteignant les filtres et les filtres présentent des transparences différentes selon les axes de polarisation.

11. Dispositif d'affichage selon l'une quelconque des revendications 7 à 10, **caractérisé en ce que** les filtres comportent des hologrammes et la source de lumière comporte au moins deux transducteurs électro-optiques adaptés à éclairer lesdits hologrammes avec des angles d'incidence différents pour faire apparaître différents symboles ou messages sur la surface d'affichage, le moyen de modulation étant adapté à faire varier l'angle d'incidence des rayons lumineux émis par la source de lumière.

12. Dispositif d'affichage selon l'une quelconque des revendications 1 à 11, **caractérisé en ce qu'**il comporte un moyen de réception (670) de signaux issus d'un clavier dont les touches (610A, 610B) comportent des surfaces d'affichage, signaux représentatifs des touches de clavier activées par l'utilisateur, le moyen de réception étant adapté à affecter aux dits signaux le symbole affiché par la touche activée par l'utilisateur.

13. Dispositif selon l'une quelconque des revendications 1 à 12, **caractérisé en ce que** l'un, au moins, desdits filtres (212, 213, 214) est constitué d'une encre déposée sur un support.

14. Dispositif selon l'une quelconque des revendications 1 à 13, **caractérisé en ce que** l'un desdits filtres (213) est porté en face avant de ladite surface d'affichage.

15. Dispositif choisi parmi un assistant numérique personnel, un organiseur, un téléphone, une console de jeu, un ordinateur portable, un terminal d'accès à internet, un distributeur automatique de billets, un tableau de bord, une montre, une télécommande, un baladeur, un système de positionnement et un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeu, un élément de décoration, une lampe, un bouton électrique et/ou un panneau d'affichage, **caractérisé en ce qu'**il comporte un dispositif d'affichage selon l'une quelconque des revendications 1 à 14.

16. Procédé d'affichage qui comporte :
- une étape d'extinction (715, 720, 725, 730, 815) d'une source de lumière d'un dispositif comportant :
- au moins un filtre dit « amont » portant à un message à afficher,
- au moins un deuxième filtre portant un message à afficher différent du message porté par chaque filtre amont,
- un élément partiellement réfléchissant placé en aval d'au moins le filtre amont et intégré dans le deuxième filtre (213) ou placé en amont du deuxième filtre (213),
la source de lumière étant adaptée à éclairer chaque dit filtre, par rétro-éclairage, pour masquer le message porté par chaque filtre amont et rendre visible le message porté par le deuxième filtre, et
- une étape d'allumage (715, 720, 725, 815) de ladite source de lumière pour faire apparaître un message porté par un filtre amont.

## Claims

1. A display device which comprises:
- at least one filter termed "upstream" (212, 214, 1306) carrying a message to be displayed,
- at least one second filter (213, 1310) carrying a message to be displayed that is different from the message carried by each upstream filter,
- a light source (230, 232, 240, 1320, 1330) suitable for illuminating each said filter, by backlighting,
**Characterized in that** it comprises a partially reflecting element (211, 1300) placed downstream of at least the upstream filter and integrated into the second filter (213) or placed upstream of the second filter (213), in such a manner that, when the light source is turned off, the message carried by each upstream filter, masked by the partially reflecting element, is not visible and, when the light source is turned on, a message carried by an upstream filter is visible.

2. The display device as claimed in claim 1, **characterized in that** the partially reflecting element is integrated into the second filter (513), the contour of the message to be displayed being defined by the contour of a partially reflecting zone integrated with said second filter.

3. The device as claimed in any one of claims 1 to 2, **characterized in that** at least two of said filters (212, 213, 214) are superimposed in the display surface.

4. The device as claimed in any one of claims 1 to 3, **characterized in that** at least two of said filters (1112, 1113, 1114) consist, each of a set of filters, said filter sets being juxtaposed alternately in the display surface.

5. The device as claimed in any one of claims 1 to 4, **characterized in that** it comprises at least one contactor (216) suitable for providing a signal representative of the interaction between a user and at least one part of the display surface.

6. The device as claimed in claim 5, **characterized in that** it comprises a plurality of keys (210, 220) comprising a said contactor (216, 226).

7. The display device as claimed in any one of claims 1 to 6, **characterized in that** it comprises a means (240) for modulating at least one physical characteristic of said light source (230, 232), at least two filters, each corresponding to a value of physical characteristic modulated by the modulation means and to a message to be displayed on said display surface.

8. The device as claimed in claim 7, **characterized in that** the modulation means (240) is suitable for varying the luminous spectral band which reaches said filters and said filters exhibit spectral bands of different transparency.

9. The display device as claimed in any one of claims 7 or 8, **characterized in that** the light source comprises at least two independent electro-optical transducers (230, 232) placed in parallel on an optical path of light rays originating from the light source and reaching the display surface, the modulation means being suitable for alternately controlling the emission of light by one or the other of the electro-optical transducers.

10. The display device as claimed in any one of claims 7 to 9, **characterized in that** the modulation means (240) is suitable for varying a main polarization axis of the light rays reaching the filters and the filters exhibit different transparencies according to the polarization axes.

11. The display device as claimed in any one of claims 7 to 10, **characterized in that** the filters comprise holograms and the light source comprises at least two electro-optical transducers suitable for illuminating said holograms with different angles of incidence so as to reveal various symbols or messages on the display surface, the modulation means being suitable for varying the angle of incidence of the light rays emitted by the light source.

12. The display device as claimed in any one of claims 1 to 11, **characterized in that** it comprises a means (670) for receiving signals arising from a keyboard whose keys (610A, 610B) comprise display surfaces, signals representative of the keyboard keys activated by the user, the reception means being suitable for assigning the symbol displayed by the key activated by the user to said signals.

13. The device as claimed in any one of claims 1 to 12, **characterized in that** one, at least, of said filters (212, 213, 214) consists of an ink deposited on a support.

14. The device as claimed in any one of claims 1 to 13, **characterized in that** one of said filters (213) is carried on the front face of said display surface.

15. A device chosen from among a personal digital assistant, an organizer, a telephone, a games console, a portable computer, an Internet access terminal, an automatic teller machine, a dashboard, a watch, a remote control, a portable music player, a positioning system and an audiovisual signals receiver, an item of electronic, office or leisure equipment, a facsimile machine, a photocopier, a scanner, a reader of recorded media, a home automation installation, an electrodomestic appliance, an item of medical equipment, a measurement apparatus, an automated analysis device, an item of automobile equipment, a signboard, a switch, a games device, a decorative element, a lamp, an electrical button and/or a display panel, **characterized in that** it comprises a display device as claimed in any one of claims 1 to 14.

16. A display method which comprises:
- a step (715, 720, 725, 730, 815) of turning off a light source of a device comprising:
- at least one filter termed "upstream" carrying a message to be displayed,
- at least one second filter carrying a message to be displayed that is different from the message carried by each upstream filter,
- a partially reflecting element placed downstream of at least the upstream filter and integrated into the second filter (213) or placed upstream of the second filter (213),
the light source being suitable for illuminating each said filter, by backlighting, so as to mask the message carried by each upstream filter and make visible the message carried by the second filter, and
- a step (715, 720, 725, 815) of turning on said light source so as to reveal a message carried by an upstream filter.

## Patentansprüche

1. Anzeigevorrichtung, mit
- mindestens einem « vorgeschalteten » Filter (212, 214, 1306), mit einer anzuzeigenden Nachricht,
- mindestens einem zweiten Filter (213, 1310), mit einer anzuzeigenden Nachricht, die verschieden ist von der Nachricht, die auf jedem vorgeschalteten Filter steht,
- einer Lichtquelle (230, 232, 240, 1320, 1330), geeignet, jeden der genannten Filter durch Backlighting zu beleuchten,
**Dadurch gekennzeichnet, dass** sie ein teilweise reflektierendes Element (211, 1300) beinhaltet, zumindest unterhalb des vorgeschalteten Filters platziert und in den zweiten Filter (213) integriert oder oberhalb des zweiten Filters (213) platziert, so dass, wenn die Lichtquelle ausgeschaltet ist, die Nachricht auf jedem vorgeschalteten Filter, maskiert durch das teilweise reflektierende Element, nicht sichtbar ist und die Nachricht auf dem zweiten Filter sichtbar ist, und, wenn die Lichtquelle an ist, eine Nachricht auf einem vorgeschalteten Filter sichtbar ist.

2. Vorrichtung nach Anspruch 1, wobei das teilweise reflektierende Element in den zweiten Filter (513) integriert ist, die Kontur der anzuzeigenden Nachricht wird durch die Kontur einer teilweise reflektierenden Fläche definiert, welche in den zweiten Filter integriert ist.

3. Vorrichtung nach einem der Ansprüche 1 bis 2, **dadurch gekennzeichnet, dass** mindestens zwei der genannten Filter (212, 213, 214) sich in der Anzeigefläche überlagern.

4. Vorrichtung nach einem der Ansprüche 1 bis 3, wobei mindestens zwei der genannten Filter (1112, 1113, 1114) jeweils aus einer Reihe von Filtern bestehen, die besagten Filter liegen im Anzeigebereich abwechselnd nebeneinander.

5. Vorrichtung nach einem der Ansprüche 1 bis 4, **dadurch gekennzeichnet, dass** sie mindestens einen Schalter (216) beinhaltet, um ein Signal zu liefern, welches der Interaktion zwischen einem Benutzer und zumindest einem Teil der Anzeigefläche entspricht.

6. Vorrichtung nach Anspruch 5, **dadurch gekennzeichnet, dass** sie eine Vielzahl von Tasten (210, 220) beinhaltet mit einem sogenannten Schalter (216, 226).

7. Anzeigevorrichtung nach einem der Ansprüche 1 bis 6, **dadurch gekennzeichnet, dass** es ein Mittel (240) beinhaltet zur Modulation von mindestens einer physikalischen Eigenschaft der besagten Lichtquelle (230, 232), mit mindestens zwei Filtern, die jeweils einem Wert der physikalischen Eigenschaft entsprechen, der durch das Modulationsmittel moduliert wird, und einer anzuzeigenden Nachricht auf der besagten Anzeigefläche.

8. Vorrichtung nach Anspruch 7, **dadurch gekennzeichnet, dass** das Modulationsmittel (240) geeignet ist, das Lichtspektralband zu variieren, welches den besagten Filtern zukommt und besagte Filter Spektralbänder unterschiedlicher Transparenz haben.

9. Anzeigevorrichtung nach Anspruch 7 oder 8, **dadurch gekennzeichnet, dass** die Lichtquelle mindestens zwei unabhängige elektro-optische Wandler (230, 232) beinhaltet, parallel platziert auf einem optischen Weg der Lichtstrahlen, welche von der Lichtquelle kommen und die Anzeigefläche erreichen, das Modulationsmittel ist geeignet, die Emission von Licht abwechselnd durch den einen oder anderen der elektro-optische Wandler zu steuern.

10. Anzeigevorrichtung nach einem der Ansprüche 7 bis 9, **dadurch gekennzeichnet dass** das Modulationsmittel (240) geeignet ist, eine Haupt-Polarisationsachse der Lichtstrahlen zu variieren, welche die Filter erreichen und die Filter weisen unterschiedliche Transparenzen auf, je nach Polarisierungsaxe.

11. Anzeigevorrichtung nach einem der Ansprüche 7 bis 10, **dadurch gekennzeichnet dass** die Filter Hologramme beinhalten und die Lichtquelle mindestens zwei elektro-optische Wandler enthält, geeignet, besagte Hologramme mit verschiedenen Einfallswinkeln zu beleuchten, um verschiedene Symbole oder Nachrichten auf der Anzeigefläche anzuzeigen, das Modulationsmittel ist geeignet, um den Einfallswinkel der von der Lichtquelle kommenden Lichtstrahlen zu variieren.

12. Anzeigevorrichtung nach einem der Ansprüche 1 bis 11, **dadurch gekennzeichnet, dass** sie ein Empfangsmittel (670) vorsieht für Signale, ausgehend von einer Tastatur, deren Tasten (610A, 610B) Anzeigeflächen vorsehen, Signale, die den jeweils durch den Benutzer aktivierten Tasten entsprechen, das Empfangsmittel ist geeignet, den besagten Signalen das Symbol der durch den Benutzer aktivierten Taste zuzuweisen.

13. Vorrichtung nach einem der Ansprüche 1 bis 12, **dadurch gekennzeichnet, dass** zumindest einer der besagten Filter (212, 213, 214) aus einer auf einen Träger aufgebrachten Tinte besteht.

14. Vorrichtung nach einem der Ansprüche 1 bis 13, wobei einer der besagten Filter (213) auf der Vorderseite der besagten Anzeigefläche angebracht ist.

15. Vorrichtung beliebig wählbar zwischen einem Persönlichen Digitalen Assistenten, einem elektronischen Organisator, einem Telefon, einer Spielkonsole, einem Laptop, einem Internet-Zugangs-Terminal, einem Geldautomaten, einem Amarturenbrett, einer Uhr, einer Fernbedienung, einem tragbaren Musik-Player, einem Ortungssystem und einem audio-visuellen Signal-Empfänger, einem elektronischen, Büro- oder Freizeitartikel, einem Faxgerät, einem Kopierer, einem Scanner, einem Media-Player, einer Home-Automation-Einrichtung, einem Haushaltsgerät, einem medizinischen Gerät, einem Messgerät, einem Analysegerät, einem Automobilzubehörteil, einem Anzeigeschild, einem Schalter, einem Spielgerät, einem dekorativen Element, einer Lampe, einem elektrischen Knopf und/oder einer Anzeigetafel, **dadurch gekennzeichnet, dass** sie eine Anzeigevorrichtung nach einem der Ansprüche 1 bis 14 vorweist.

16. Anzeigeverfahren, aufweisend:
- Eine Ausschaltphase (715, 720, 725, 730, 815) der Lichtquelle einer Vorrichtung bestehend aus:
- Mindestens einem « vorgeschalteten » Filter mit einer anzuzeigenden Nachricht,
- Mindestens einem zweiten Filter mit einer anzuzeigenden Nachricht, die verschieden ist von der Nachricht, die auf jedem vorgeschalteten Filter steht,
- Ein teilweise reflektierendes Element, zumindest vor den vorgeschalteten Filter platziert und in den zweiten Filter (213) integriert oder vor dem zweiten Filter (213) positioniert, wobei die Lichtquelle abgestimmt ist, jeden der besagten Filter zu beleuchten, durch Hintergrundbeleuchtung, um die Nachricht auf jedem vorgeschalteten Filter zu maskieren und die Nachricht auf dem zweiten Filter sichtbar zu machen, und
- Eine Anschaltphase (715, 720, 725, 815) der besagten Lichtquelle, um eine Nachricht auf einem vorgeschalteten Filter anzuzeigen.
